# FASCICULE DE BREVET EUROPEEN

(11) **EP 3 112 971 B1**
(45) Date de publication et mention de la délivrance du brevet: **08.11.2017**
(21) Numéro de dépôt: 16171111.4
(22) Date de dépôt: 24.05.2016
(51) Int. Cl.: G05D 1/08

(54) **PROCÉDÉ DE DÉTERMINATION DE VALEURS DE CONSIGNE DE LA VITESSE AIR LONGITUDINALE ET DE LA VITESSE SOL LONGITUDINALE D'UN AÉRONEF À VOILURE TOURNANTE SELON SON EXPOSITION AU VENT**
VERFAHREN ZUR BESTIMMUNG DER SOLL-FLUGGESCHWINDIGKEIT IN LÄNGSRICHTUNG UND ÜBER GRUND IN LÄNGSRICHTUNG EINES DREHFLÜGELFLUGZEUGS GEMÄSS DER WINDEXPOSITION
A METHOD OF DETERMINING THE LONGITUDINAL AIR SPEED COMMAND AND THE LONGITUDINAL GROUND SPEED COMMAND OF A ROTARY WING AIRCRAFT DEPENDING ON ITS EXPOSURE TO THE WIND

(30) Priorité: 28.05.2015 FR 1501096
(43) Date de publication de la demande: 04.01.2017
(73) Titulaire: Airbus Helicopters, 13725 Marignane Cedex (FR)
(72) Inventeur: SALESSE-LAVERGNE, Marc, 13190 ALLAUCH (FR)
(74) Mandataire: GPI & Associés

(56) Documents cités:
- WO-A2-2012/134447
- FR-A1- 2 741 855

## Description

La présente invention est du domaine des systèmes de commande de vol des aéronefs à voilures tournantes et plus particulièrement des assistances à l'utilisation de ces commandes de vol telles qu'un pilote automatique.

La présente invention concerne un procédé de détermination de la projection de la consigne de « vitesse air » et de la projection de la consigne de « vitesse sol » d'un aéronef à voilure tournante selon une direction longitudinale de cet aéronef en fonction de son exposition au vent. La présente invention concerne également un système de détermination de la projection de la vitesse air et de la projection de la vitesse sol d'un aéronef à voilure tournante.

On entend par l'expression « vitesse air » la vitesse d'avancement de l'aéronef à voilure tournante par rapport à l'air et par l'expression « vitesse sol » la vitesse d'avancement de l'aéronef par rapport au sol.

Par ailleurs et dans un souci de simplification de la description, on utilisera par la suite l'expression « vitesse air longitudinale *V_{airX}* » pour désigner la projection de la vitesse air de l'aéronef selon la direction longitudinale de cet aéronef. De même, on utilisera l'expression « vitesse sol longitudinale *V_{solX}* » pour désigner la projection de la vitesse sol de l'aéronef selon la direction longitudinale de cet aéronef.

Les aéronefs à voilures tournantes sont des appareils volants qui se distinguent principalement des autres aéronefs motorisés par leur capacité à évoluer aussi bien en vol de croisière à vitesses élevées qu'en vol à basses vitesses ou en vol stationnaire. Une telle capacité est procurée par l'exploitation d'au moins un rotor principal à axe de rotation sensiblement vertical équipant l'aéronef.

Ce rotor principal constitue une voilure tournante procurant la sustentation, voire aussi la propulsion de l'aéronef. Le comportement de l'aéronef à voilure tournante en vol peut être modifié à partir d'une variation du pas cyclique et/ou du pas collectif des pales de la voilure tournante. Une variation du pas cyclique des pales induit une modification du comportement de l'aéronef en assiette, et plus particulièrement en tangage et/ou en roulis. Une variation du pas collectif des pales induit une modification du comportement de l'aéronef en sustentation, pouvant générer des déplacements particulièrement suivant un axe sensiblement vertical, mais également suivant ses axes de tangage et de roulis selon l'assiette de l'aéronef.

L'aéronef à voilure tournante est aussi manoeuvrable en lacet sur lui-même, à partir de l'exploitation d'un dispositif anticouple en lacet. Par exemple, un tel dispositif anticouple est formé d'un rotor de queue à axe de rotation sensiblement horizontal situé à l'arrière de l'aéronef. Un tel rotor arrière comporte plusieurs pales dont généralement uniquement le pas collectif est variable bien que le pas cyclique puisse également être variable.

Un aéronef à voilure tournante comporte généralement un seul rotor principal et un rotor arrière anticouple. Cependant, un aéronef à voilure tournante peut également comporter deux rotors principaux contrarotatifs, par exemple en tandem ou bien coaxiaux, aucun dispositif anticouple n'étant alors nécessaire.

De plus, un hélicoptère hybride est un aéronef à voilure tournante comportant au moins un rotor principal, procurant principalement sa sustentation et à moindres mesures sa propulsion, et au moins un moyen de propulsion spécifique tel qu'une hélice propulsive. Un tel hélicoptère hybride permet de couvrir de grandes distances et d'évoluer avec une vitesse d'avancement élevée. Le dispositif anticouple de cet hélicoptère hybride peut être formé par l'une au moins des hélices propulsives. Une telle hélice propulsive comporte plusieurs pales dont généralement uniquement le pas collectif est variable.

En outre, un aéronef à voilure tournante peut comporter des éléments aérodynamiques tels que des empennages, voire des ailes dans le cas des hélicoptères hybrides notamment. Ces éléments aérodynamiques peuvent comporter des parties mobiles et participent à la manoeuvrabilité de l'aéronef et notamment lors de vol de croisière à des vitesses d'avancement élevées.

Une variation du comportement en vol de l'aéronef à voilure tournante peut alors être réalisée à partir d'une modification de différents paramètres de vol de l'aéronef. Ces différents paramètres de vol concernent notamment les valeurs de pas cyclique et/ou collectif des pales des rotors principaux ainsi que la valeur de pas collectif des pales du rotor anticouple et/ou des moyens de propulsion et les éventuels éléments aérodynamiques. Une telle modification de ces paramètres de vol est susceptible d'être réalisée selon divers modes de commande.

Selon un mode manuel de commande, le pilote de l'aéronef à voilure tournante dispose de leviers de commande entraînés manuellement par ce pilote de l'aéronef pour opérer une variation de ces paramètres de vol et notamment des pas cyclique et/ou collectif des pales des différents rotors par l'intermédiaire de chaînes cinématiques de commande manuelle. La notion de manuelle est à considérer en opposition à la notion d'automatique, sans préjuger du moyen utilisé par l'homme pour manoeuvrer l'aéronef, palonnier, manette ou manche notamment.

Suivant une forme de réalisation d'un mode manuel de commande, les leviers de commande sont en prise sur des chaînes respectives à transmission mécanique distante d'efforts, permettant au pilote de l'aéronef à voilure tournante de manoeuvrer mécaniquement les pales à partir des leviers de commande, soit directement, soit par l'intermédiaire de servocommandes.

Suivant une autre forme de réalisation d'un mode manuel de commande, un entraînement d'un levier de commande par le pilote est générateur de signaux électriques d'activation d'au moins une servocommande de manoeuvre des pales.

Selon un mode automatisé de commande, un pilote automatique est générateur d'ordres de commande de ces paramètres de vol et notamment d'une variation du pas des pales des différents rotors par l'intermédiaire de chaînes cinématiques de commande automatisée. Lorsque le pilote automatique est activé, les ordres de commande se substituent aux ordres de commande générés par le pilote directement à partir des leviers de commande pour activer les servocommandes.

Le pilote automatique permet de maintenir une progression stable de l'aéronef à voilure tournante selon des consignes de vol préalablement mémorisées. Un état effectif de progression de l'aéronef est évalué par le pilote automatique à un instant donné au regard de diverses informations fournies par l'instrumentation de bord de l'aéronef. A partir d'une différence détectée par le pilote automatique entre les consignes de vol et l'état effectif de progression de l'aéronef, le pilote automatique intervient sur le comportement en vol de l'aéronef à voilure tournante par l'intermédiaire d'un ou plusieurs paramètres de vol pour rétablir son état effectif de progression conformément aux consignes de vol.

L'activation du pilote automatique est commandée par le pilote de l'aéronef à voilure tournante à partir d'un ou de plusieurs boutons de commande spécifiques.

Selon un mode de stabilisation mis en oeuvre par le pilote automatique, une consigne initiale de tenue d'assiette de l'aéronef à voilure tournante est par exemple définie au regard de l'état de progression de l'aéronef évalué à partir de l'activation du pilote automatique. Le mode de stabilisation procure une stabilisation de l'aéronef par correction d'assiette de l'aéronef au moyen du pilote automatique par rapport à la consigne initiale.

Selon un mode particulier de pilotage par transparence, le pilote peut éventuellement intervenir temporairement sur le comportement de l'aéronef par l'intermédiaire des leviers de commande, en surpassant les ordres de commande générés par le pilote automatique. Les consignes initiales de vol sont figées, une éventuelle intervention temporaire du pilote sur le comportement de l'aéronef n'induisant pas de modification des consignes initiales de vol.

Il est par ailleurs connu de corriger une consigne de vol telle une consigne de tenue d'assiette en fonction de l'état de progression effective de l'aéronef à voilure tournante à l'issue d'une action du pilote sur les leviers de commande. Il est encore connu de permettre au pilote de l'aéronef de corriger une consigne de tenue d'assiette en faisant varier la valeur de cette consigne par incrémentation, par l'intermédiaire d'un ou plusieurs organes de commande dédiés. Par exemple, deux organes de commande désignés généralement par le terme anglais « beep » sont utilisés. Par exemple, de tels organes de commande peuvent être positionnés respectivement sur un levier de commande de pas collectif généralement appelé « manche » et un levier de commande de pas cyclique.

Le document FR1347243 décrit un dispositif de pilotage par transparence permettant une action du pilote avec soit un retour aux consignes initiales de vol après arrêt de l'action du pilote et soit un enregistrement de nouvelles consignes de vol prenant en compte cette action du pilote.

On connait également le document FR2991664 qui décrit un système automatisé d'assistance au pilotage permettant de tenir un paramètre de vol sur un axe de progression de l'aéronef tout en prenant en compte l'action du pilote de l'aéronef sur au moins un autre axe par l'intermédiaire de leviers de commande de vol lors du fonctionnement du pilote automatique de l'aéronef. Différents modes de guidage sont susceptibles d'être sélectionnés par le pilote privilégiant par exemple une tenue en vitesse verticale ou d'avancement ou bien une tenue de cap, d'incidence ou de pente.

De plus, le document US5001646 décrit un système de commande automatisé permettant au pilote d'agir sur la progression de l'aéronef par l'intermédiaire d'un organe de commande muni de quatre axes. Le pilote peut alors commander les accélérations longitudinale, latérale et verticale de l'aéronef ainsi que sa vitesse angulaire en lacet tout en conservant d'une part, à basse vitesse d'avancement, une vitesse par rapport au sol indépendamment du cap suivi et d'autre part, à grande vitesse d'avancement, un virage coordonné et une pente.

La stabilisation de l'aéronef à voilure tournante est procurée à partir de modes de base, selon lesquels le pilote automatique est par exemple générateur d'une augmentation de stabilité par amortissement des mouvements angulaires de l'aéronef, ou encore de tenue d'assiettes ou de cap. Les modes de base procurent un confort de pilotage pour le pilote de l'aéronef à voilure tournante, mais ne corrigent pas d'éventuels écarts par rapport à la vitesse ou la position de l'aéronef désirées par le pilote. Il a donc été proposé d'associer aux modes de base des modes supérieurs de fonctionnement pour annuler d'éventuels écarts de position, de vitesse et/ou d'accélération de l'aéronef par rapport aux valeurs désirées par le pilote. Ces valeurs désirées sont entrées sous forme de consignes de vol que les modes supérieurs du pilote automatique utilisent pour amener et maintenir l'aéronef sur la position, la vitesse et/ou l'accélération désirées. L'opération de stabilisation de l'aéronef procurée par les modes de base est effectuée rapidement par le pilote automatique, tandis que l'opération de rétablissement de la position, de la vitesse et/ou de l'accélération de l'aéronef à voilure tournante est ensuite effectuée plus lentement par les modes supérieurs.

On connait par exemple le document WO95/34029 qui décrit un système de commande de vol d'un aéronef permettant de stabiliser les vitesses de l'aéronef en contrôlant les commandes selon les axes de lacet, roulis et tangage ainsi que la portance tout en conservant un cap constant.

Le pilote automatique est encore susceptible de procurer des fonctions avancées d'assistance au guidage de l'aéronef à voilure tournante. Les potentialités offertes par les modes supérieurs sont accessoirement exploitées pour procurer une telle assistance. Les modalités d'exécution des fonctions avancées relèvent de fonctionnalités prédéfinies du pilote automatique, au regard d'une trajectoire de consigne que doit suivre l'aéronef.

De fait, le fonctionnement de tels modes supérieurs de pilotage automatique est conçu pour des opérations IFR désignant en langue anglaise « Instruments Flight Rules », c'est-à-dire pour un pilotage pouvant être effectué uniquement à l'aide des instruments de vol et pouvant alors être réalisé avec une vision extérieure de l'aéronef dégradée, voire aucune vision extérieure.

Par opposition, un pilotage à vue est réalisé selon des opérations VFR désignant en langue anglaise « Visual Flight Rules ». L'expression en langue anglaise « pilotage eyes-out » est également utilisée et signifie que le pilote effectue un pilotage de l'aéronef en regardant à l'extérieur de l'aéronef et non uniquement à l'aide des instruments et assistances de vol.

La trajectoire de consigne est par exemple exploitée au regard d'une mission de vol préalablement déterminée par le pilote de l'aéronef à voilure tournante ou bien en phase d'approche d'un site connu et repéré. Un tel site est notamment équipé de moyens procurant une interactivité entre le site et le pilote automatique, tels que des balises de radionavigation. En l'absence de tels équipements interactifs, le repérage du site est effectué par le pilote de l'aéronef en mode manuel, puis, le pilote de l'aéronef active la fonction avancée souhaitée.

Les modalités de fonctionnement du pilote automatique permettent une assistance automatisée du pilotage en correction d'assiette de l'aéronef à voilure tournante en phase de vol de croisière, à vitesses d'avancement élevées et à une position de l'aéronef éloignée du sol. En phase de vol de croisière, l'environnement de l'aéronef est normalement dégagé et le pilote de l'aéronef est dispensé d'une intervention soutenue sur la manoeuvre de l'aéronef. Une telle dispense d'intervention soutenue est aussi susceptible d'être procurée à proximité du sol en environnement connu par la mise en oeuvre d'une fonction avancée du pilote automatique, tel que pour une phase d'approche d'une piste d'atterrissage connue et/ou équipée de moyens de repérage de son environnement.

De même, lors d'une phase d'approche d'un site d'intervention, y compris à basses vitesses, parfaitement connu, identifié et repéré par le pilote automatique, l'activation d'une fonction avancée est rendue possible pour guider l'aéronef à voilure tournante suivant la trajectoire de consigne correspondante.

En outre, le pilote automatique commande, comme un homme pilotant l'aéronef, traditionnellement les vitesses longitudinale, latérale et verticale de l'aéronef respectivement par le pas cyclique longitudinal, le pas cyclique latéral et le pas collectif des pales du rotor principal, le pas collectif des pales d'un rotor anticouple pilotant l'orientation de l'aéronef autour de son axe de lacet. Ces vitesses longitudinale, latérale et verticale sont définies dans un repère lié à l'aéronef dont les axes sont formés par les directions longitudinale, latérale et verticale de l'aéronef.

La consigne de vitesse d'avancement du pilote automatique peut alors être égale à la vitesse air ou bien la vitesse sol de l'aéronef selon la phase de vol de l'aéronef. Généralement, la vitesse sol est utilisée comme consigne de vitesse d'avancement lors des vols à basses altitudes, c'est-à-dire l'aéronef étant proche d'obstacles tels que le relief et les bâtiments. La vitesse air est quant à elle utilisée comme consigne de vitesse d'avancement essentiellement lors des vols de croisière à hautes altitudes, c'est-à-dire l'aéronef étant éloigné de tout obstacle.

Cependant, en cas de vent fort subi par l'aéronef, par exemple en cas de fort vent arrière, l'utilisation de la vitesse sol comme consigne de vitesse d'avancement peut s'avérer dangereuse notamment lorsque cette vitesse sol est faible.

De fait, le choix de la consigne de vitesse d'avancement peut être problématique selon les conditions de vol de l'aéronef.

Par ailleurs, un pilote automatique peut également permettre à l'aéronef de réaliser des virages coordonnés. Un virage coordonné est un virage réalisé sans dérive de l'aéronef vis-à-vis de la trajectoire du virage par rapport au sol, il s'agit alors d'une coordination sol, ou bien sans facteur de charge latéral, il s'agit alors d'une coordination air.

Dans le cas d'une coordination sol, un virage est coordonné par rapport au sol. L'aéronef n'a pas de dérive vis-à-vis du sol, permet ainsi de suivre avec précision une trajectoire au sol. Un tel virage coordonné par rapport au sol est utilisé de préférence à faible vitesse et basse altitude afin de se déplacer en sécurité à proximité du relief ou de bâtiments, le nez de l'aéronef restant généralement aligné sur la trajectoire au sol.

Dans le cas d'une coordination air, un virage est coordonné par rapport à l'air. L'aéronef n'a pas de dérive vis-à-vis de l'air et privilégiant ainsi le confort des occupants et minimisant le dérapage de l'aéronef. Un tel virage coordonné par rapport à l'air est utilisé de préférence en vol de croisière, c'est-à-dire à haute vitesse et haute altitude et loin de tout obstacle.

On connait le document US5213283 qui décrit un système de commande permettant de réaliser un virage coordonné. Ce système de commande fournit automatiquement une commande de pilotage en lacet en réponse à une commande de pilotage en roulis du pilote de l'aéronef lors de la réalisation d'un tel virage coordonné, la charge du pilote étant ainsi réduite.

En outre, le document WO2012/134447 décrit un système de commande de vol d'un aéronef permettant de réaliser un virage coordonné dans l'ensemble du domaine de vol, en minimisant la charge de travail du pilote. Ce système de commande utilise à haute vitesse d'une part des changements d'inclinaison de l'aéronef pour piloter le cap ainsi qu'une accélération latérale et d'autre part la vitesse par rapport à l'air de l'aéronef pour piloter le cap, réalisant un virage coordonné par rapport à l'air. A basse vitesse, le système de commande utilise l'angle de dérapage de l'aéronef pour maintenir le cap aligné sur la trajectoire de l'aéronef, réalisant ainsi un virage coordonné par rapport au sol. Dans une zone de transition entre ces deux domaines de vol, l'angle de dérapage de l'aéronef et son accélération latérale sont utilisés pour maintenir l'aéronef en virage coordonné.

Par ailleurs, les aéronefs à voilures tournantes sont des aéronefs motorisés prévus pour pouvoir évoluer dans des conditions variées et parfois difficiles, tant au niveau des conditions atmosphériques, telles que la présence d'un vent violent et de conditions de visibilité variables, qu'au niveau des conditions de vol, telles qu'à basses vitesses ou en vol stationnaire, ou encore de l'environnement, tel que proches d'un quelconque sol inconnu ou mal connu.

Dans des conditions de vol difficiles, des facteurs inattendus sont susceptibles de devoir être pris en compte par le pilote de l'aéronef à voilure tournante. L'exploitation par le pilote de l'aéronef d'une assistance automatisée à la manoeuvre de l'aéronef dans de telles conditions de vol difficiles est donc délicate, voire impossible. Par exemple lorsque l'aéronef est proche du sol, une éventuelle modification de son comportement doit être rapidement opérée. Les modalités de fonctionnement du pilote automatique ne permettent que difficilement une modification rapide d'une trajectoire à suivre par l'aéronef au moyen de l'exploitation d'une fonction avancée mettant en oeuvre les modes supérieurs de fonctionnement du pilote automatique.

De fait, lors de telles conditions de vol difficiles, l'utilisation d'un pilotage IFR peut être dangereuse et un pilotage à vue est à privilégier, le pilote pouvant cependant utiliser certains instruments et/ou assistance de l'aéronef. On parle notamment de conditions de vol à vue en conditions VMC correspondant à l'acronyme désignant en langue anglaise « Visual Meteorological Conditions » ou en conditions de visibilité dégradée DVE correspondant à l'acronyme désignant en langue anglaise « Degraded Visual Environment ». Le pilote peut alors avoir besoin d'ajuster fréquemment la vitesse et/ou la trajectoire de l'aéronef afin d'éviter d'éventuels obstacles et de se rapprocher de ses objectifs, par exemple en cas de fort vent latéral.

Le document FR2777535 décrit un système de commande de vol d'un aéronef permettant notamment de contrôler la vitesse latérale par rapport au sol en gardant un cap constant afin de compenser par exemple un fort vent latéral. Ce système de commande permet également de maintenir la direction de la vitesse de l'aéronef, et donc sa trajectoire, constante lors d'une modification de son cap et/ou de sa vitesse longitudinale.

Par ailleurs, on connait le document WO2012/134460 qui décrit un système de commande de vol d'un aéronef permettant de conserver une trajectoire constante par rapport au sol lors d'une rotation de cap à basse vitesse. Le système de commande agit sur les commandes en tangage et roulis afin de maintenir cette trajectoire, le pilote pouvant engager une rotation de l'aéronef à tout moment par l'intermédiaire de ces commandes.

De même, le document WO2012/096668 décrit un système de commande de vol d'un aéronef permettant de contrôler la vitesse verticale de l'aéronef, sa pente par rapport au sol et/ou une hauteur par rapport au sol selon sa vitesse d'avancement. En-dessous d'un seuil de vitesse d'avancement prédéterminé, correspondant à une situation de vol proche d'un vol stationnaire, le système de commande de vol permet de tenir une hauteur par rapport au sol. Au-dessus de ce seuil de vitesse d'avancement prédéterminé, le système de commande de vol permet alors de tenir une vitesse verticale de l'aéronef ou bien une pente par rapport au sol.

De plus, le document FR2814433 décrit un dispositif de commande de vol d'un aéronef dont une action sur un organe de commande peut avoir différents effets suivant la vitesse de translation de l'aéronef. Ainsi, si cette vitesse de translation de l'aéronef est inférieure ou égale à un seuil prédéterminé, une action sur cet organe de commande agit directement sur cette vitesse de translation. Par contre, si cette vitesse de translation de l'aéronef est supérieure à ce seuil prédéterminé, une action sur cet organe de commande agit par exemple, sur l'accélération en translation de l'aéronef ou bien sur sa vitesse angulaire.

En outre, le document WO2013/012408 décrit un système de commande de vol d'un aéronef permettant de réaliser de façon automatique des mises en vol stationnaire de l'aéronef à partir d'un vol d'avancement ainsi qu'une tenue en position en vol stationnaire.

Enfin, on connait le document FR 2741855 qui décrit un système de manche cyclique d'un aéronef muni d'un dispositif de recentrage des efforts assurant la stabilité de l'aéronef en vitesse d'avancement par rapport à l'air. Notamment, le point d'ancrage du manche cyclique est déplacé en fonction de la vitesse d'avancement par rapport à l'air de l'aéronef afin de contrer les tendances à diverger en vitesse de l'aéronef.

La présente invention a alors pour objet un procédé de détermination de la consigne de vitesse air longitudinale *V_{airX}* et de la consigne de vitesse sol longitudinale *V_{solX}* d'un aéronef à voilure tournante selon l'exposition de l'aéronef au vent ainsi qu'un système de détermination de cette consigne de vitesse air longitudinale *V_{airX}* et de cette consigne de vitesse sol longitudinale *V_{solX}* selon l'exposition de l'aéronef au vent au cours d'un vol tout en s'affranchissant des limitations mentionnées ci-dessus. L'exposition de l'aéronef au vent comprend d'une part la vitesse totale du vent subi par l'aéronef et d'autre part l'orientation de l'aéronef par rapport à la direction du vent.

Selon l'invention, un procédé de détermination de la consigne de vitesse air longitudinale *V_{airX}* et de la consigne de vitesse sol longitudinale *V_{solX}* selon l'exposition de l'aéronef au vent est destiné à un aéronef à voilure tournante comportant au moins un moyen de commande et un pilote automatique générateur d'ordres de commande selon des modes prédéfinis de fonctionnement et selon des consignes de vol. Ces moyens de commande sont par exemple des leviers ou des manches de commande, un palonnier ou encore des organes de commande tels que des « beeps » (beep : expression en langue anglaise pour « signal sonore » en langue française) qui permettent au pilote de l'aéronef de piloter par transparence cet aéronef lors du fonctionnement du pilote automatique.

L'aéronef est caractérisé par trois directions privilégiées, une direction longitudinale X s'étendant de l'arrière de l'aéronef vers l'avant de l'aéronef, une direction d'élévation Z s'étendant de bas en haut perpendiculairement à la direction longitudinale X et une direction transversale Y s'étendant de droite à gauche perpendiculairement aux directions longitudinale X et d'élévation Z. La direction longitudinale X est l'axe de roulis de l'aéronef, la direction transversale Y est son axe de tangage et la direction d'élévation Z est son axe de lacet.

L'aéronef comporte au moins une voilure tournante, munie de plusieurs pales principales dont le pas collectif et le pas cyclique sont variables autour d'un axe de pas, permettant à l'aéronef d'effectuer des mouvements de rotation autour de ces directions X,Y,Z et de translation selon les directions X,Y,Z. Les ordres de commande du pilote automatique peuvent provoquer ces mouvements de l'aéronef en rotation et/ou en translation par rapport aux directions X,Y,Z.

L'aéronef évolue généralement selon une trajectoire *Tₛₒₗ* déterminée par rapport au sol dans le but d'atteindre un objectif au sol tel qu'un terrain d'atterrissage. On considère que l'aéronef évolue selon une trajectoire *Tₛₒₗ* lorsque son centre de gravité suit cette trajectoire *Tₛₒₗ.* De fait, cette trajectoire *Tₛₒₗ* est définie dans un repère géographique terrestre, c'est-à-dire fixe par rapport au globe terrestre, dans lequel l'aéronef est mobile. Ce repère géographique terrestre est par exemple formé à partir des points cardinaux, par exemple par les directions du nord et de l'ouest ainsi que par une direction verticale telle que celle de la gravité terrestre.

Un aéronef vole selon cette trajectoire *Tₛₒₗ* avec une vitesse d'avancement Va. La vitesse d'avancement Va de l'aéronef est sa vitesse selon la direction de cette trajectoire *Tₛₒₗ* et peut être déterminée par rapport au sol pour former une vitesse sol *Vₛₒₗ* et par rapport à l'air pour former une vitesse air *Vₐᵢᵣ.*

Un vol de l'aéronef selon cette trajectoire *Tₛₒₗ* est également caractérisé par un angle de route sol *TKₛₒₗ* pris par rapport à la direction du nord, dans un plan horizontal de ce repère géographique terrestre, une pente P donnant l'inclinaison de cette trajectoire *Tₛₒₗ* par rapport à ce plan horizontal de ce repère géographique terrestre et un cap ψ.

Le cap ψ de l'aéronef est l'angle formé par la projection dans le plan horizontal du repère terrestre de la direction longitudinale X de l'aéronef et la direction du nord. Ainsi, lorsque le cap ψ et l'angle de route sol *TKₛₒₗ* sont égaux, le nez de l'aéronef pointe sur la trajectoire *Tₛₒₗ.* De la sorte, la direction longitudinale X est alors alignée sur cette trajectoire *Tₛₒₗ.* Dans le cas contraire, le nez de l'aéronef ne se trouve pas sur cette trajectoire *Tₛₒₗ* et cette trajectoire *Tₛₒₗ* ne se trouve alors pas alignée sur la direction longitudinale X, un aéronef à voilure tournante ayant la particularité de pouvoir avancer dans toutes les directions indépendamment de sa direction longitudinale X.

Le procédé de détermination de la consigne de vitesse air longitudinale *V_{airX}* et de la consigne de vitesse sol longitudinale *V_{solX}* d'un aéronef à voilure tournante selon l'exposition au vent de l'aéronef est remarquable en ce que :
- au cours d'une étape préliminaire, on détermine des courbes caractéristiques en vitesses de l'aéronef dans un repère avec en ordonnée la vitesse sol longitudinale *V_{solX}* de l'aéronef et en abscisse sa vitesse air longitudinale *V_{airX},* chaque courbe caractéristique en vitesses étant composée de points de fonctionnement de l'aéronef caractérisés par une vitesse air longitudinale *V_{airX}* et une vitesse sol longitudinale *V_{solX},*
- au cours d'une étape d'initialisation, on identifie pour la phase de vol courante de l'aéronef une courbe caractéristique en vitesses initiale sur laquelle se trouve le point de fonctionnement courant de l'aéronef,
- on commande pour cette phase de vol courante, tant que le pilote ne commande pas sur la direction longitudinale une accélération ou une décélération de l'aéronef, les vitesses longitudinales air *V_{airX}* et sol *V_{solX}* de l'aéronef en fonction de la variation de la vitesse totale du vent sur la direction longitudinale de l'aéronef afin que le point de fonctionnement courant de l'aéronef se déplace sur cette courbe caractéristique en vitesses initiale, et
- suite à une commande par le pilote sur la direction longitudinale d'une accélération ou d'une décélération de l'aéronef, on identifie une nouvelle courbe caractéristique en vitesses sur laquelle se trouve le nouveau point de fonctionnement courant de l'aéronef une fois que ces vitesses longitudinales air *V_{airX}* et sol *V_{solX}* sont stabilisées et sensiblement constantes.

Un aéronef à voilure tournante comporte au moins une voilure tournante à axe de rotation sensiblement vertical, c'est-à-dire parallèle à la direction d'élévation Z, et peut être construit selon plusieurs architectures. L'aéronef comporte par exemple une seule voilure tournante formée par un rotor principal assurant la sustentation et la propulsion de l'aéronef ainsi qu'un rotor arrière anticouple à axe de rotation sensiblement horizontal, c'est-à-dire parallèle à la direction transversale Y. Ce rotor arrière anticouple permet également des manoeuvres autour de l'axe de lacet.

Selon un autre exemple, l'aéronef comporte deux voilures tournantes formées par deux rotors principaux contrarotatifs qui sont en tandem ou bien coaxiaux. L'aéronef peut également comporter au moins une voilure tournante, tel un rotor principal, assurant principalement la sustentation de l'aéronef et une ou plusieurs hélices propulsives à axes de rotation sensiblement horizontaux, c'est-à-dire parallèles à la direction longitudinale X, assurant sa propulsion. Un tel aéronef constitue alors un hélicoptère hybride.

Par ailleurs, un aéronef à voilure tournante peut comporter des éléments aérodynamiques tels que des empennages ou bien des ailes dans le cas des hélicoptères hybrides notamment.

Quelle que soit l'architecture de l'aéronef, le pilote de l'aéronef peut modifier le comportement en vol de l'aéronef en agissant sur un ou plusieurs moyens de commande. Par exemple, des leviers ou bien des manches provoquent une variation du pas cyclique longitudinal et latéral et/ou du pas collectif des pales principales. Un palonnier provoque une variation du pas collectif des pales secondaires d'un rotor arrière alors qu'une manette peut provoquer une variation du pas collectif des pales secondaires d'au moins une hélice propulsive. De plus, le pilote de l'aéronef peut également provoquer un déplacement des parties mobiles des éléments aérodynamiques éventuellement présents sur l'aéronef afin de modifier le comportement en vol de l'aéronef.

En outre, le pilote automatique peut également modifier le comportement en vol de l'aéronef, par l'intermédiaire des ordres de commandes qu'il fournit et selon les consignes de vol, en provoquant une variation du pas cyclique et/ou du pas collectif des pales principales, une variation du pas collectif des pales secondaires d'un rotor arrière ou bien d'au moins une hélice propulsive ainsi qu'un déplacement des parties mobiles des éléments aérodynamiques éventuellement présents.

Selon certains modes de fonctionnement du pilote automatique, le pilote de l'aéronef peut intervenir par transparence sur le comportement de l'aéronef par l'intermédiaire des moyens de commande, à savoir des leviers ou des manches de commande, un palonnier ou encore des beeps. Les actions du pilote par transparence surpassent alors temporairement les ordres de commande générés par le pilote automatique pour provoquer un changement d'au moins un paramètre de la trajectoire *Tₛₒₗ* suivie par l'aéronef. Les consignes de vol du pilote automatique peuvent être modifiées et figées sur les nouveaux paramètres de la trajectoire *Tₛₒₗ.*

Ainsi, le pilote peut par exemple commander une accélération ou une décélération de l'aéronef selon la direction longitudinale par l'intermédiaire d'un levier de commande de variation du pas cyclique longitudinal des pales du rotor principal de l'aéronef ou bien d'un beep.

Au cours d'un vol, un aéronef évolue avec une vitesse air et une vitesse sol, la différence entre ces deux vitesses étant liée à la vitesse du vent subi par l'aéronef. D'ailleurs, lorsque la vitesse de ce vent subi par l'aéronef est nulle, la vitesse air et la vitesse sol sont identiques. La vitesse air ou bien la vitesse sol peuvent être utilisées comme consigne de vitesse d'avancement du pilote automatique en fonction des conditions de vol et de la phase de vol effectuée.

Cependant, le vent subi par l'aéronef, caractérisé par son exposition par rapport à l'aéronef, peut avoir une influence sur le choix de cette consigne de vitesse d'avancement du pilote automatique.

Le procédé de détermination de la consigne de vitesse air longitudinale *V_{airX}* et de la consigne de vitesse sol longitudinale *V_{solX}* d'un aéronef selon l'exposition au vent de l'aéronef permet avantageusement de prendre en compte une variation de la vitesse longitudinale du vent relatif subi par l'aéronef au cours d'une phase de vol lorsqu'aucune accélération ni décélération de l'aéronef n'est commandée par le pilote sur la direction longitudinale afin de déterminer la vitesse air longitudinale *V_{airX}* et la vitesse sol longitudinale *V_{solX}* correspondant au point de fonctionnement courant de l'aéronef et, par suite, d'appliquer une consigne de la vitesse longitudinale d'avancement Vc au pilote automatique égale à cette vitesse sol longitudinale *V_{solX}* ou bien à cette vitesse air longitudinale *V_{airX}.*

On entend par « vitesse longitudinale du vent relatif subi par l'aéronef » une projection sur la direction longitudinale X de la vitesse totale du vent relatif subi par l'aéronef. Par convention, on considère qu'une vitesse longitudinale du vent relatif subi par l'aéronef est négative lorsque l'aéronef subit un vent de face et qu'une telle vitesse longitudinale du vent est positive lorsque l'aéronef subit un vent arrière.

De la sorte, la vitesse sol longitudinale *V_{solX}* de l'aéronef est égale à la somme de la vitesse air longitudinale *V_{airX}* et de la vitesse longitudinale du vent relatif subi par l'aéronef.

De plus, ce procédé permet également suite à une commande par le pilote sur la direction longitudinale d'une accélération ou d'une décélération de l'aéronef de déterminer la consigne de vitesse air longitudinale *V_{airX}* et la consigne de vitesse sol longitudinale *V_{solX}* de l'aéronef selon la vitesse longitudinale du vent relatif subi par l'aéronef et, par suite, d'appliquer au pilote automatique de l'aéronef une nouvelle consigne de la vitesse d'avancement. Chaque courbe caractéristique en vitesses correspondant en effet à une phase de vol de l'aéronef.

On entend par « phase de vol» de l'aéronef un vol de l'aéronef au cours duquel le pilote ne commande sur la direction longitudinale aucune accélération ni décélération de l'aéronef. De fait, au cours d'une telle phase de vol, l'aéronef peut suivre une trajectoire droite ou bien une trajectoire courbe et effectuer des virages qui peuvent être coordonnés. De plus, une telle phase de vol de l'aéronef peut être effectuée avec un changement de l'altitude de l'aéronef.

Un changement de la phase de vol de l'aéronef est ainsi opéré uniquement lorsque le pilote commande sur la direction longitudinale une accélération ou bien une décélération de l'aéronef, par exemple par l'intermédiaire d'un levier de commande de variation du pas cyclique longitudinal des pales du rotor principal de l'aéronef.

Une nouvelle phase de vol est alors atteinte lorsque cette accélération ou bien cette décélération de l'aéronef cesse, c'est-à-dire dès que sa vitesse air longitudinale *V_{airX}* et que sa vitesse sol longitudinale *V_{solX}* sont stabilisées et constantes.

Suite à cette commande sur la direction longitudinale d'une accélération ou bien d'une décélération de l'aéronef et au changement de la phase de vol de l'aéronef, le point de fonctionnement courant de l'aéronef est modifié et se situe alors sur une nouvelle courbe caractéristique en vitesses.

Ces courbes caractéristiques en vitesses de l'aéronef peuvent être déterminées de manière expérimentale, suite à des vols d'essais effectués par l'aéronef, ces vols d'essais couvrant alors l'essentiel du domaine de vol. Cependant, ces courbes caractéristiques en vitesses de l'aéronef peuvent également être déterminées de manière théorique par calcul et éventuellement corrigées et affinées par des vols d'essais, ces essais en vol étant alors limités.

Ces courbes caractéristiques en vitesses peuvent être définies de façon analytique par une ou plusieurs relations mathématiques. Ces courbes caractéristiques en vitesses peuvent également être définies par des tableaux de valeurs de vitesses air longitudinales *V_{airX}* et de vitesses sol longitudinales *V_{solX},* issues par exemple des vols d'essais.

En outre, pour de faibles vitesses sol qui correspondent en général à des vols à basses altitudes et proches d'obstacles, la consigne de vitesse d'avancement du pilote automatique de l'aéronef est sensiblement égale à la vitesse sol. De fait, pour une première plage de vitesses correspondant aux faibles vitesses sol, les courbes caractéristiques en vitesses sont partiellement voire entièrement des droites sensiblement horizontales. Le procédé selon l'invention tend ainsi à préserver la vitesse sol de l'aéronef aux faibles vitesses sol. On entend par « préserver une vitesse » la maintenir constante.

De même, pour de grandes vitesses air qui correspondent en général à des vols de croisière à hautes altitudes et loin de tout obstacle, la consigne de vitesse d'avancement du pilote automatique de l'aéronef est sensiblement égale à la vitesse air. De fait, pour une seconde plage de vitesses correspondant aux fortes vitesses air, les courbes caractéristiques en vitesses sont partiellement voire entièrement des droites sensiblement verticales. Le procédé selon l'invention tend ainsi à préserver la vitesse air de l'aéronef aux fortes vitesses air.

Pour une vitesse air longitudinale *Vₐᵢᵣ* supérieure à une vitesse air longitudinale maximale *V_{airXMax},* les courbes caractéristiques en vitesses de l'aéronef sont des droites strictement verticales correspondant respectivement à une vitesse air longitudinale *V_{airX}* constante, indépendamment de la vitesse longitudinale du vent et de la vitesse sol longitudinale *V_{solX}.* Cette vitesse air longitudinale maximale *V_{airXMax}* est par exemple égale à 120 noeuds (120kt).

Par ailleurs, entre ces première et seconde plages de vitesses, le procédé selon l'invention assure une transition progressive et équilibrée entre une préservation de la vitesse sol *Vₛₒₗ* de l'aéronef et une préservation de sa vitesse air *Vₐᵢᵣ.*

De plus, ces courbes caractéristiques en vitesses mettent ainsi en évidence le basculement progressif d'un maintien d'une vitesse sol *Vₛₒₗ* aux basses vitesses d'avancement vers un maintien d'une vitesse air *Vair* aux hautes vitesses d'avancement.

Chaque courbe caractéristique en vitesses est généralement constituée par un premier segment horizontal correspondant à une vitesse sol longitudinale *V_{solX}* constante, un arc de cercle et un second segment vertical correspondant à une vitesse air longitudinale *V_{airX}* constante.

La transition entre la vitesse sol longitudinale *V_{solX}* et la vitesse air longitudinale *V_{airX}* utilisée comme consigne de vitesse longitudinale d'avancement *Vc* à appliquer au pilote automatique se produit lorsque le point de fonctionnement de l'aéronef se trouve sur un point de transition situé sur l'arc de cercle d'une courbe caractéristique en vitesses. En conséquence, lorsque le point de fonctionnement est situé sur le premier segment ou bien sur une première partie de l'arc de cercle située entre le premier segment et le point de transition de cet arc de cercle, la consigne de vitesse longitudinale d'avancement *Vc* du pilote automatique est égale à la vitesse sol longitudinale *V_{solX}* de ce point de fonctionnement.

De même, lorsque le point de fonctionnement est situé sur le second segment ou bien sur une seconde partie de l'arc de cercle située entre le point de transition de cet arc de cercle et le second segment, la consigne de vitesse longitudinale d'avancement *Vc* du pilote automatique est égale à la vitesse air longitudinale *V_{airX}* de ce point de fonctionnement.

De préférence, le point de transition est situé au milieu de l'arc de cercle de chaque courbe caractéristique en vitesses.

Lorsque le point de fonctionnement courant se trouve sur l'arc de cercle reliant les premier et second segments de cette courbe caractéristique en vitesses, la vitesse sol longitudinale *V_{solX}* et la vitesse air longitudinale *V_{airX}* sont susceptibles de varier simultanément selon des sens de variations opposés lorsque la vitesse longitudinale du vent varie.

Par exemple, la vitesse sol longitudinale *V_{solX}* augmente suite à une augmentation de la vitesse longitudinale du vent subi par l'aéronef alors que la vitesse air longitudinale *V_{airX}* diminue simultanément.

En revanche, lorsque la vitesse air longitudinale *V_{airX}* est supérieure à la vitesse air longitudinale maximale *V_{airXMax},* le point de fonctionnement est situé sur une droite verticale correspondant à une vitesse air longitudinale *V_{airX},* constante comme précédemment évoqué. La consigne de vitesse longitudinale d'avancement *Vc* du pilote automatique de l'aéronef est alors égale à cette vitesse air longitudinale *V_{airX}* quelle que soit l'exposition au vent de l'aéronef et donc indépendamment de la vitesse longitudinale du vent subi par l'aéronef. Le procédé selon l'invention consiste alors à une stabilisation de la vitesse air quelles que soient les conditions de vent longitudinal subi par l'aéronef. Avantageusement, le procédé selon l'invention permet ainsi une utilisation de l'aéronef à puissance constante, proche de sa puissance maximale pour les vitesses air longitudinales *V_{airX}* supérieures à la vitesse air longitudinale maximale *V_{airXMax}.*

Par ailleurs, lors d'un vol, un passage de l'aéronef en vent arrière, par fort vent, peut être accompagné d'une décélération jusqu'à des vitesses air faibles, afin de garder une vitesse sol longitudinale *V_{solX}* constante, ou, tout au moins, d'éviter d'avoir une accélération de l'aéronef trop importante par rapport au sol. Une telle manoeuvre peut s'avérer dangereuse pour tout aéronef et pour un aéronef à voilure tournante en particulier. En effet, l'aéronef évolue alors dans une masse d'air brassée par le rotor principal avec un risque que cette masse d'air brassée et mise en mouvement descendant par un effet tourbillonnaire ne soit plus suffisamment porteuse pour assurer la manoeuvrabilité, voire la sustentation de l'aéronef. Cette situation dangereuse est notamment désignée par les expressions en langue anglaise « Vortex Ring State » et « settling with power », cette seconde expression signifiant que l'application d'une puissance supplémentaire au niveau du rotor principal n'arrête pas la mise en descente de l'aéronef.

Afin d'éviter une telle situation, la vitesse air longitudinale *V_{airX}* doit être supérieure ou égale à une vitesse air longitudinale minimale *V_{airXMin}.* De fait, aucune courbe caractéristique en vitesses de l'aéronef n'est utilisée pour une vitesse air longitudinale *V_{airX}* inférieure à cette vitesse air longitudinale minimale *V_{airXMin}.*

Cette vitesse air longitudinale minimale *V_{airXMin}* est par exemple constante et égale à 30 noeuds (30 kt).

Cette vitesse air longitudinale minimale *V_{airXMin}* peut également dépendre du vent subi par l'aéronef et en particulier du module de la vitesse totale de ce vent.

Par exemple, pour des modules de la vitesse totale du vent supérieurs ou égaux à 40 kt, cette vitesse air longitudinale minimale *V_{airXMin}* est égale à 30 kt. Ensuite, cette vitesse air longitudinale minimale *V_{airXMin}* décroît linéairement avec la diminution du module de la vitesse totale du vent jusqu'à être égale à 0 kt pour des modules inférieurs ou égaux à 10 kt. En effet, la manoeuvre précédemment évoquée est moins dangereuse par faible vent car un faible vent arrière tend moins à faire accélérer l'aéronef et, par suite, la nécessité de décélérer l'aéronef pour garder la vitesse sol longitudinale *V_{solX}* constante est moindre.

Avantageusement, le procédé selon l'invention utilise la vitesse totale du vent subi par l'aéronef et non sa seule projection longitudinale. Ainsi, quelle que soit l'exposition de l'aéronef au vent, la vitesse air longitudinale minimale *V_{airXMin}* est définie afin d'anticiper un éventuel changement de cap de l'aéronef pour se positionner en vent arrière pur.

La vitesse air longitudinale minimale *V_{airXMin}* constitue ainsi une limite du domaine opérationnel des vitesses longitudinales de l'aéronef pour l'application des courbes caractéristiques en vitesses de l'aéronef. Une vitesse sol longitudinale minimale *V_{solXMin}* constitue également une limite du domaine opérationnel des vitesses longitudinales.

Par ailleurs, la vitesse longitudinale du vent subi par l'aéronef peut varier consécutivement à un changement de la direction du vent dans le repère terrestre par exemple par rapport au nord ou bien de son module. Cette variation de la vitesse longitudinale du vent subi par l'aéronef peut également être consécutive à un changement de l'orientation de l'aéronef par rapport au vent faisant suite à la réalisation d'un virage par l'aéronef ou bien un changement du cap ψ de l'aéronef, l'aéronef restant toutefois dans la même phase de vol. Ce changement du cap ψ peut avoir pour but d'améliorer la visibilité du pilote de l'environnement de l'aéronef notamment lors d'un vol à basse altitude et être éventuellement réalisé sans changement de sa trajectoire *Tₛₒₗ.*

La réalisation de ce virage ou bien du changement du cap ψ peut être effectuée par le pilote automatique afin de suivre une trajectoire *Tₛₒₗ* prédéterminée. Ce virage peut également être réalisé par une action du pilote par transparence de même que pour le changement de cap ψ. Cette action par transparence est par exemple réalisée par l'intermédiaire d'un premier moyen de commande pilotant le pas cyclique latéral des pales principales du rotor principal de cet aéronef, tel qu'un manche de pas cyclique, dit couramment « manche cyclique », ou un beep de roulis.

Par ailleurs, le pilote de l'aéronef peut également agir par transparence sur la vitesse d'avancement de l'aéronef par l'intermédiaire d'un moyen de commande sur la direction longitudinale pilotant le pas cyclique longitudinal des pales principales du rotor principal de cet aéronef, tel qu'un manche cyclique ou bien un beep de tangage. Le pilote de l'aéronef peut également agir selon la direction longitudinale par transparence sur cette vitesse d'avancement par l'intermédiaire d'un moyen de commande pilotant le pas des hélices propulsives dans le cas d'un hélicoptère hybride.

Cette action du pilote sur la vitesse d'avancement de l'aéronef entraîne une accélération ou bien une décélération de l'aéronef générant un changement de cette vitesse d'avancement sans que la trajectoire *Tₛₒₗ* de l'aéronef soit modifiée et, par suite, un changement de la phase de vol de l'aéronef. En conséquence, la courbe caractéristique en vitesses initiale précédemment identifiée n'est plus valable, le nouveau point de fonctionnement de l'aéronef consécutif à ce changement de la vitesse d'avancement ne se trouvant pas sur cette courbe caractéristique en vitesses initiale. Une nouvelle courbe caractéristique en vitesses doit alors être identifiée en fonction de ce nouveau point de fonctionnement et de la nouvelle phase de vol de l'aéronef.

Par exemple, si la consigne de vitesse d'avancement du pilote automatique est égale à la vitesse sol longitudinale *V_{solX}* et si l'action du pilote entraîne une accélération de l'aéronef et, par suite, une augmentation de cette consigne de vitesse d'avancement, la vitesse sol longitudinale *V_{solX}* est augmentée ainsi que la vitesse air longitudinale *V_{airX}.* Par suite, la vitesse longitudinale du vent relatif subi par l'aéronef est également modifiée. Le nouveau point de fonctionnement, correspondant à ces vitesses sol longitudinale *V_{solX}* et air longitudinale *V_{airX}* augmentées, permet alors d'identifier la nouvelle courbe caractéristique en vitesses sur laquelle se trouve le nouveau point de fonctionnement, ainsi que la nouvelle vitesse longitudinale du vent relatif subi par l'aéronef.

De même, si la consigne de vitesse d'avancement du pilote automatique est égale à la vitesse air longitudinale *V_{airX}* et si l'action du pilote entraîne une accélération de l'aéronef et, par suite, une augmentation de cette consigne de vitesse d'avancement, la vitesse air longitudinale *V_{airX}* est augmentée ainsi que la vitesse sol longitudinale *V_{solX}.* Par suite, la vitesse longitudinale du vent relatif subi par l'aéronef est également modifiée. Le nouveau point de fonctionnement, correspondant à ces vitesses air longitudinale *V_{airX}* et sol longitudinale *V_{solX}* augmentées, permet alors d'identifier la nouvelle courbe caractéristique en vitesses ainsi que la nouvelle vitesse longitudinale du vent relatif subi par l'aéronef.

Ainsi, un changement de courbe caractéristique en vitesses est donc consécutif à une commande d'accélération ou de décélération de l'aéronef réalisée par le pilote sur la direction longitudinale, par exemple par une action longitudinale sur le manche cyclique de l'aéronef ou bien un beep de tangage.

A contrario, le point de fonctionnement reste sur une courbe caractéristique en vitesses tant qu'aucune commande d'accélération ou de décélération de l'aéronef n'est effectuée par le pilote sur la direction longitudinale, le pilote n'agissant alors pas de façon longitudinale sur le manche cyclique de l'aéronef ou bien sur le beep de tangage.

En outre, comme précédemment évoqué, le point de fonctionnement reste également sur une même courbe caractéristique en vitesses suite à une commande d'accélération ou de décélération de l'aéronef réalisée par le pilote sur la direction latérale, par exemple par une action latérale sur le manche cyclique ou bien sur le beep de roulis.

De plus, l'atteinte des limites du domaine opérationnel peut provoquer, simultanément au respect des contraintes des vitesses air ou sol longitudinales minimales, un changement de courbes caractéristiques en vitesses. Par exemple, lorsque la vitesse air longitudinale *V_{airX}* est égale à la vitesse air longitudinale minimale *V_{airXMin}* et que la vitesse longitudinale du vent diminue, à chaque instant, une nouvelle courbe caractéristique en vitesses est déterminée à partir du point de fonctionnement courant. En effet, la vitesse air longitudinale minimale *V_{airXMin}* étant atteinte, la vitesse air longitudinale *V_{airX}* ne peut être réduite. La vitesse sol longitudinale *V_{solX}* est alors augmentée et une nouvelle courbe caractéristique en vitesses est alors figée dès que les conditions de vent permettent de rester sur cette courbe caractéristique en vitesses tout en respectant les contraintes de la vitesse air longitudinale minimale *V*_{*airX*Min}.

En revanche, afin d'éviter dans ce cas des changements de courbes caractéristiques en vitesses à la moindre fluctuation de la vitesse longitudinale du vent subi par l'aéronef, un seuil de protection est pris en compte.

Par exemple, il faut que la différence entre d'une part la somme de la vitesse longitudinale du vent et de la vitesse air longitudinale minimale *V_{airXMin}* et d'autre part la vitesse sol longitudinale *V_{solX}* prescrite par la courbe caractéristique en vitesses initiale soit supérieure à ce seuil de protection lorsque l'aéronef vole avec une vitesse air longitudinale *V_{airX}* égale à la vitesse air longitudinale minimale *V_{airXMin}* pour que la courbe caractéristique en vitesses change.

Par ailleurs, la vitesse air longitudinale *V_{airX}* qui est égale à la valeur minimale *V_{airXMin}* est sensiblement constante de même que la vitesse sol longitudinale *V_{solX}* qui est prescrite par la courbe caractéristique en vitesses initiale. En conséquence, on peut également comparer plus simplement la variation de la vitesse longitudinale du vent à un seuil de protection, une variation de la vitesse longitudinale du vent supérieure à ce seuil de protection déterminant que la courbe caractéristique en vitesses initiale doit changer.

L'utilisation de ce seuil de protection peut être remplacée par l'utilisation d'un seuil à hystérésis sur cette différence entre d'une part la somme de la vitesse longitudinale du vent et de la vitesse air longitudinale minimale *V_{airXMin}* et d'autre part la vitesse sol longitudinale *V_{solX}* prescrite par la courbe caractéristique en vitesses. Un seuil à hystérésis peut également être appliqué uniquement sur la variation de la vitesse longitudinale du vent.

On entend par seuil à hystérésis un ensemble de deux seuils dont la consigne d'activation d'un système est différente de sa consigne d'arrêt. Un tel seuil à hystérésis se compose d'un seuil haut et d'un seuil bas différents. La présence de ces deux seuils permet essentiellement d'éviter de trop nombreux activations et arrêts consécutifs. Pour la mise à jour de la courbe caractéristique en vitesses de ce procédé selon l'invention, un seuil haut Vₛₑᵤᵢₗ₁ est appliqué à la différence entre d'une part la somme de la vitesse longitudinale du vent et de la vitesse air longitudinale minimale *V_{airXMin}* et d'autre part la vitesse sol longitudinale *V_{solX}* prescrite par la courbe caractéristique en vitesses initiale. Cette vitesse sol longitudinale *V_{solX}* prescrite par la courbe caractéristique en vitesses initiale est alors considérée comme une référence de vitesse sol longitudinale, tant qu'une nouvelle courbe caractéristique en vitesses n'est pas figée.

Dès que cette différence est supérieure à ce seuil haut Vₛₑᵤᵢₗ₁, on change la courbe caractéristique en vitesses utilisée tant que la vitesse longitudinale du vent augmente et, par suite, la vitesse sol longitudinale *V_{solX}* augmente également. Le changement de courbes caractéristiques en vitesses est suspendu dès que la vitesse sol longitudinale *V_{solX}* est constante ou bien diminue.

Un seuil bas Vₛₑᵤᵢₗ₂ est alors appliqué à la même différence entre d'une part la somme de la vitesse longitudinale du vent et de la vitesse air longitudinale minimale *V_{airXMin}* et d'autre part la vitesse sol longitudinale *V_{solX}* prescrite par une nouvelle courbe caractéristique en vitesses. Dès que cette seconde différence est inférieure à ce seuil bas Vₛₑᵤᵢₗ₂ alors la nouvelle courbe caractéristique en vitesses est figée.

Par exemple, le seuil haut Vₛₑᵤᵢₗ₁ est égal à 3 kt et le seuil bas Vₛₑᵤᵢₗ₂ est égal à 1 kt.

Par ailleurs, une action du pilote visant à ralentir l'aéronef prévaut sur les limitations minimales de ce domaine opérationnel. En effet, une action du pilote est prioritaire sur ces limitations minimales afin que le procédé selon l'invention ne contrarie pas l'intention du pilote.

De fait, si le pilote ralentit volontairement l'aéronef à une vitesse air longitudinale inférieure à la vitesse air longitudinale minimale *V_{airXMin},* une nouvelle vitesse air longitudinale minimale *V_{airXMin2}* est alors définie. Cette nouvelle vitesse air longitudinale minimale *V_{airXMin2}* est réduite par rapport à la vitesse air longitudinale *V_{airX}* choisie par le pilote d'une valeur prédéterminée V_{δ}, typiquement 10 kt, et remplace la vitesse air longitudinale minimale *V_{airXMin}* initiale jusqu'à ce que la vitesse air longitudinale *V_{airX}* dépasse la vitesse air longitudinale minimale *V_{airXMin}* initiale d'une valeur égale à la même valeur prédéterminée V_{δ}, typiquement 10 kt.

En revanche, si le pilote ralentit volontairement l'aéronef à une vitesse sol longitudinale inférieure à la vitesse sol longitudinale minimale *V_{solXMin},* alors le procédé de détermination de la vitesse air longitudinale *V_{airX}* et de la vitesse sol longitudinale *V_{solX}* d'un aéronef est réduit à un pur maintien de la vitesse sol longitudinale *V_{solX}* et aucune courbe caractéristique en vitesses n'est utilisée. Le procédé selon l'invention permet alors un pilotage de l'aéronef par exemple avec un pur maintien de la vitesse sol longitudinale *V_{solX}* selon les commandes effectuées par le pilote.

Ensuite, la détermination de la consigne de vitesse air longitudinale *V_{airX}* et de la consigne de vitesse sol longitudinale *V_{solX}* de l'aéronef suivant le procédé selon l'invention est de nouveau effective dès que la vitesse sol longitudinale *V_{solX}* courante de l'aéronef est supérieure à la vitesse sol longitudinale minimale *V_{solXMin}.*

En outre, selon un mode de fonctionnement particulier du pilote automatique, le vol de l'aéronef peut être réalisé soit avec une correction du cap associée à chaque déplacement latéral, selon le terme générique de "virage coordonné", soit avec une tenue de cap, selon la vitesse sol de l'aéronef. Lors d'un vol avec virages coordonnés, les consignes de vol du pilote automatique sont un angle de route sol *TKₛₒₗ,* la vitesse d'avancement Va, une pente P, et une composante de vitesse latérale faible. Pour maintenir cette vitesse latérale faible malgré une commande en déplacement latéral, le cap ψ doit évoluer constamment.

A l'inverse, pour un vol en tenue de cap, ces consignes de vol sont une vitesse sol longitudinale *V_{solX},* une vitesse sol latérale *V_{solY},* une vitesse verticale *W_{Z}* et le cap ψ la plupart du temps constant.

De plus, selon ce mode de fonctionnement particulier du pilote automatique, le pilote de l'aéronef peut agir directement et par transparence sur ces consignes de vol par l'intermédiaire d'un ou plusieurs moyens de commande tels que des manches ou bien des beeps aussi bien en tenue de cap qu'en coordination de virage. De préférence, la tenue de cap est utilisée près d'une phase de vol stationnaire donc pour des vitesses d'avancement faibles, à basses altitudes et la coordination de virage pour les vitesses d'avancement plus importantes telles qu'en vol de croisière.

Par ailleurs, une action du pilote de l'aéronef par transparence entraînant la réalisation d'un virage doit être accompagnée par une coordination de virage jusqu'aux basses vitesses, mais pas en vol stationnaire où le pilote s'attend plutôt à ce que le cap soit tenu. De fait, une transition est nécessaire entre la phase "coordination de virage" et la phase "tenue de cap". D'ailleurs, cette transition doit être réalisée d'autant plus rapidement que le vent de face est fort car il est préférable de maintenir un vent de face stable et de faire une manoeuvre latérale dans des conditions de vents forts. Lors d'une décélération de l'aéronef sans mouvement latéral, la coordination de virage conserve le cap. La transition entre la phase "coordination de virage" et la phase "tenue de cap" peut alors passer tout-à-fait inaperçue au pilote. La matérialisation de cette transition est donc souhaitable pour aider le pilote à comprendre les changements de commande du pilote automatique, par exemple sous la forme d'un symbole matérialisant la référence de cap, souvent désigné par le terme anglais « bug », apparaissant sur l'échelle de cap ou d'un changement de forme pour la consigne des vitesses sol.

La transition virage coordonné vers tenue de cap n'est pas gênante pour le pilote de l'aéronef en vol rectiligne, alors qu'elle peut être perturbante en virage. Un tel passage d'une coordination de virage à une tenue de cap, alors que le pilote a incliné l'appareil en roulis, conduirait en effet à une augmentation rapide, désagréable et inattendue du facteur de charge latéral pouvant aller jusqu'à une désorientation du pilote. Le procédé de détermination de la vitesse air longitudinale et de la vitesse sol longitudinale selon l'invention ne doit donc pas entraîner un changement entre la coordination de virage et la tenue de cap au moment où le pilote ne s'y attend pas.

De fait, le procédé selon l'invention peut maintenir la vitesse sol longitudinale *V_{solX}* supérieure ou égale à la vitesse sol longitudinale minimale *V_{solXMin}* afin d'éviter ce passage d'une coordination de virage vers une tenue de cap. Cette vitesse sol longitudinale minimale *V_{solXMin}* est supérieure ou égale à une vitesse seuil de changement entre une tenue de cap et une coordination de virage. De préférence, cette vitesse sol longitudinale minimale *V_{solXMin}* est strictement supérieure à la vitesse seuil de changement entre une tenue de cap et une coordination de virage, la différence entre la vitesse sol longitudinale minimale *V_{solXMin}* et la vitesse seuil de changement entre une tenue de cap et une coordination de virage est par exemple de 4 noeuds (4 kt).

Ce risque existe principalement lorsque l'aéronef subit un vent de face dont la force augmente ou bien lorsque l'aéronef tourne de manière à amener son cap dans la direction d'où vient le vent. En conséquence, dès que la vitesse longitudinale du vent relatif subi par l'aéronef indique un vent de face suffisamment fort, le procédé selon l'invention définit une consigne de vitesse d'avancement telle que la vitesse sol longitudinale *V_{solX}* est maintenue supérieure ou égale à la vitesse sol longitudinale minimale *V*_{*solX*Min}.

De plus, lorsque l'aéronef vole avec une vitesse sol longitudinale *V_{solX}* égale à la vitesse sol longitudinale minimale *V_{solXMin}* et que l'aéronef subit un vent de face dont la force augmente ou bien lorsque l'aéronef tourne de manière à amener son cap dans la direction d'où vient le vent, le procédé selon l'invention maintient la vitesse sol longitudinale *V_{solX}* constante et entraîne une augmentation de la vitesse air longitudinale *V_{airX}.* Par suite, la courbe caractéristique en vitesses est changée pour une nouvelle courbe caractéristique en vitesses correspondant à la vitesse sol longitudinale *V_{solX}* égale à la vitesse sol longitudinale minimale *V_{solXMin}* et à la nouvelle vitesse air longitudinale *V_{airX}.*

De nouveau, afin d'éviter des changements de courbes caractéristiques en vitesses à la moindre fluctuation de la vitesse longitudinale du vent de face subi par l'aéronef, un seuil de protection est pris en compte.

Par exemple, il faut que la différence entre d'une part la soustraction de la vitesse longitudinale du vent à la vitesse sol longitudinale minimale *V_{solXMin}* et d'autre part la vitesse air longitudinale *V_{airX}* prescrite par la courbe caractéristique en vitesses initiale soit supérieure à ce seuil de protection lorsque l'aéronef vole avec une vitesse air longitudinale *V_{airX}* égale à la vitesse air longitudinale minimale *V_{airXMin}* pour que la courbe caractéristique en vitesses change.

Par ailleurs, la vitesse sol longitudinale *V_{solX}* qui est égale à la valeur minimale *V_{solXMin}* est sensiblement constante de même que la vitesse air longitudinale *V_{airX}* qui est prescrite par la courbe caractéristique en vitesses initiale. En conséquence, on peut également comparer plus simplement la variation de la vitesse longitudinale du vent à un seuil de protection, une variation de la vitesse longitudinale du vent supérieure à ce seuil de protection déterminant que la courbe caractéristique en vitesses initiale doit changer.

Comme précédemment évoqué, l'utilisation de ce seuil de protection peut être remplacée par l'utilisation d'un seuil à hystérésis sur cette différence entre d'une part la somme de la vitesse longitudinale du vent et de la vitesse air longitudinale minimale *V_{airXMin}* et d'autre part la vitesse sol longitudinale *V_{solX}* prescrite par la courbe caractéristique en vitesses. Un seuil à hystérésis peut également être appliqué uniquement sur la variation de la vitesse longitudinale du vent.

La présente invention a également pour objet un système de détermination de la consigne de vitesse air longitudinale *V_{airX}* et de la consigne de vitesse sol longitudinale *V_{solX}* d'un aéronef à voilure tournante selon l'exposition au vent de l'aéronef, l'aéronef volant selon une trajectoire *Tₛₒₗ* par rapport au sol avec une vitesse d'avancement *Va,* la vitesse d'avancement *Va* pouvant être déterminée par rapport au sol pour former une vitesse sol *Vₛₒₗ* et par rapport à l'air pour former une vitesse air *Vₐᵢᵣ.* Le système de détermination de la consigne de vitesse air longitudinale *V_{airX}* et de la consigne de vitesse sol longitudinale *V_{solX}* selon l'invention comporte au moins un calculateur et au moins une mémoire.

L'aéronef à voilure tournante est également muni d'au moins un moyen de commande et d'un pilote automatique générateur d'ordres de commande selon des modes prédéfinis de fonctionnement et selon des consignes de vol. Ces moyens de commande sont par exemple des leviers ou manches de commande et un palonnier, ou encore des organes de commande tels que des « beeps » qui permettent au pilote de l'aéronef de piloter par transparence cet aéronef lors du fonctionnement du pilote automatique.

Le système de détermination de la consigne de vitesse air longitudinale *V_{airX}* et de la consigne de vitesse sol longitudinale *V_{solX}* peut ainsi mettre en oeuvre le procédé de détermination de la consigne de vitesse air longitudinale *V_{airX}* et de la consigne de vitesse sol longitudinale *V_{solX}* précédemment décrit.

Un calculateur utilise l'ensemble des courbes caractéristiques en vitesses de l'aéronef stockées dans au moins une mémoire de ce système. Le calculateur peut déterminer la courbe caractéristique en vitesses correspondant à la phase de vol stabilisé de l'aéronef et, par suite la consigne de vitesse air longitudinale *V_{airX}* et de la consigne de vitesse sol longitudinale *V_{solX}* ainsi que la consigne de vitesse d'avancement à utiliser par le pilote automatique selon l'exposition au vent de l'aéronef.

L'invention et ses avantages apparaîtront avec plus de détails dans le cadre de la description qui suit avec des exemples de réalisation donnés à titre illustratif en référence aux figures annexées qui représentent :
- la figure 1, un aéronef équipé d'un système de détermination de la vitesse air longitudinale *V_{airX}* et de la vitesse sol longitudinale *V_{solX}* selon l'invention,
- la figure 2, un schéma représentant l'angle de route sol et le cap de l'aéronef,
- la figure 3, un schéma synoptique d'un procédé de détermination de cette vitesse air longitudinale *V_{airX}* et de cette vitesse sol longitudinale *V_{solX},* et
- les figures 4 et 5, deux graphiques représentant des courbes caractéristiques en vitesses d'un aéronef à voilure tournante.

Les éléments présents dans plusieurs figures distinctes sont affectés d'une seule et même référence.

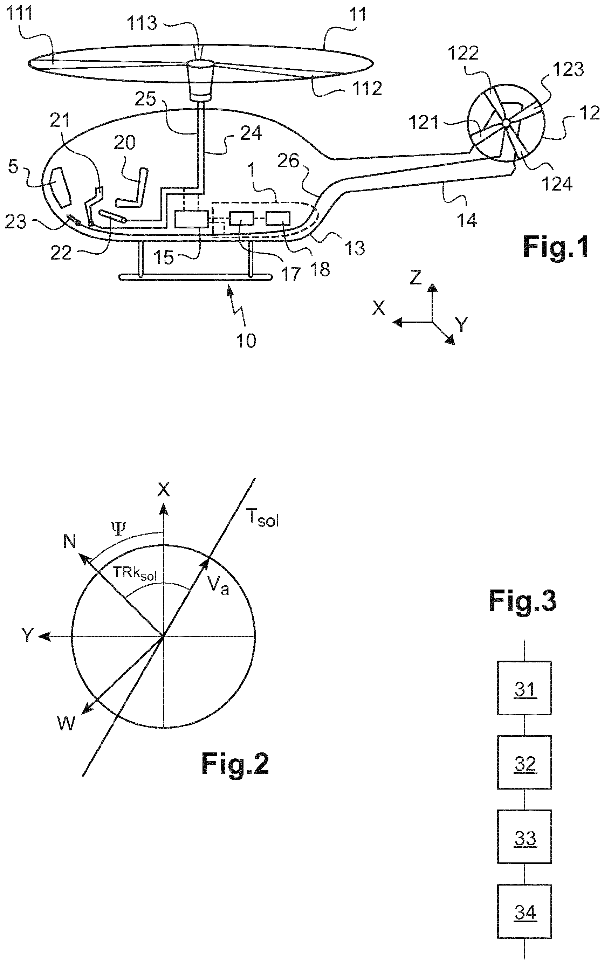

Sur la figure 1, un aéronef 10 est représenté, cet aéronef 10 comprenant un rotor principal 11 positionné au-dessus d'un fuselage 13 et un dispositif anticouple 12 tel un rotor arrière positionné à l'extrémité arrière d'une poutre de queue 14. L'aéronef 10 comporte également un tableau de bord 5, un siège 20 sur lequel peut s'asseoir un pilote de l'aéronef 10, un pilote automatique 15, un système 1 de détermination de la consigne de vitesse air *Vₐᵢᵣ* et de la consigne de vitesse sol *Vₛₒₗ* d'un aéronef à voilure tournante 10 selon l'exposition au vent de l'aéronef 10 et des moyens de commande manuels, composés notamment de deux leviers ou bien des manches de commande 21,22 et d'un palonnier 23. Ce système 1 de détermination de la consigne de vitesse air *Vₐᵢᵣ* et de la consigne de vitesse sol *Vₛₒₗ* d'un aéronef 10 comporte un calculateur 17 ainsi qu'une mémoire 18.

De plus, un repère X,Y,Z est attaché à cet aéronef 10, et plus particulièrement à son centre de gravité. La direction longitudinale X s'étend de l'arrière de l'aéronef 10 vers l'avant de l'aéronef 10, la direction d'élévation Z s'étend de bas en haut perpendiculairement à la direction longitudinale X, la direction transversale Y s'étendant de droite à gauche perpendiculairement aux directions longitudinale X et d'élévation Z.

La direction longitudinale X est l'axe de roulis de l'aéronef 10, la direction transversale Y est son axe de tangage et la direction d'élévation Z est son axe de lacet.

Le rotor principal 11 est à axe de rotation sensiblement vertical, c'est-à-dire parallèle à la direction d'élévation Z, et est muni de trois pales principales 111,112,113 dont les pas collectif et cyclique sont variables et pilotables par l'intermédiaires des manches de commande 21,22 et du pilote automatique 15. De même, le rotor arrière 12 est à axe de rotation sensiblement horizontal, c'est-à-dire parallèle à la direction transversale Y, et est muni de quatre pales secondaires 121,122,123,124 dont le pas collectif est variable et pilotable par l'intermédiaire du palonnier 23 et du pilote automatique 15.

Plus précisément, le premier manche de commande 21 pilote le pas cyclique des pales principales 111,112,113 par l'intermédiaire d'une première chaîne cinématique de commande 24. Le second manche de commande 22 pilote quant à lui le pas collectif des pales principales 111,112,113 par l'intermédiaire d'une seconde chaîne cinématique de commande 25. De fait, une action sur ce premier manche de commande 21 permet alors de commander des mouvements de rotation de l'aéronef 10 autour des directions longitudinale X et transversale Y et une action sur ce second manche de commande permet alors de commander des mouvements de translation de l'aéronef 10 selon la direction d'élévation Z.

De même, le palonnier 23 pilote le pas collectif des pales secondaires 121,122,123,124 par l'intermédiaire d'une troisième chaîne cinématique de commande 26. De fait, une action sur ce palonnier 23 permet alors de commander des mouvements de rotation de l'aéronef 10 autour de son axe de lacet.

Ces chaînes cinématiques de commande 24,25,26 permettant d'actionner les différentes pales et peuvent être par exemple composées par des liaisons totalement mécaniques entre les moyens de commande manuels 21,22,23 et les pales. Ces chaînes cinématiques de commande 24,25,26 peuvent également être composées par des liaisons mécaniques associées à des moyens d'action hydrauliques ou bien des liaisons électriques associées à de tels moyens d'action hydrauliques.

En outre, le pilote automatique 15 permet de piloter les pas collectif et cyclique des pales principales 111,112,113 ainsi que le pas collectif des pales secondaires 121,122,123,124 en agissant respectivement sur ces chaînes cinématiques de commande 24,25,26. De fait, le pilote automatique 15 permet alors de commander des mouvements de rotation de l'aéronef 10 autour des directions longitudinale X et transversale Y et des mouvements de translation de l'aéronef 10 selon la direction d'élévation Z ainsi que des mouvements de rotation de l'aéronef 10 autour de son axe de lacet.

L'aéronef 10 peut voler en suivant une trajectoire *Tₛₒₗ* par rapport au sol, cette trajectoire *Tₛₒₗ* étant déterminée par rapport au sol et définie dans un repère géographique terrestre, par exemple déterminé par les points cardinaux et la direction de la gravité terrestre.

Selon certains modes de fonctionnement du pilote automatique 15, le pilote de l'aéronef 10 peut agir par transparence par l'intermédiaire des moyens de commande 21,22,23 ainsi que par l'intermédiaire de beeps (non représentés sur la figure 1) sur le comportement de l'aéronef 10. Les actions du pilote par transparence surpassent alors temporairement les ordres de commande générés par le pilote automatique 15 pour provoquer un changement d'au moins un paramètre de la trajectoire *Tₛₒₗ* suivie par l'aéronef 10. Les consignes de vol du pilote automatique 15 peuvent être modifiées et figées sur les nouveaux paramètres de la trajectoire *Tₛₒₗ.*

Un vol d'un aéronef 10 selon cette trajectoire *Tₛₒₗ* peut être notamment caractérisé par un angle de route sol *TKₛₒₗ* entre la direction de la trajectoire *Tₛₒₗ* et la direction du nord dans un plan horizontal de ce repère géographique terrestre, une vitesse d'avancement *Va* de l'aéronef 10, une pente P formée par l'angle entre la direction de la trajectoire *Tₛₒₗ* et l'orientation horizontale du repère terrestre et un cap ψ qui est l'angle formé par la projection dans un plan horizontal du repère terrestre de la direction longitudinale X de l'aéronef 10 et la direction du nord.

La vitesse d'avancement Va de l'aéronef 10 est la vitesse de l'aéronef 10 selon la direction de cette trajectoire *Tₛₒₗ*, cette vitesse pouvant être définie par rapport au sol pour former une vitesse sol *Vₛₒₗ* ou bien par rapport à l'air pour former une vitesse air *Vₐᵢᵣ.*

La figure 2 représente une projection sur un plan horizontal de ce repère terrestre d'une trajectoire *Tₛₒₗ.* Les directions longitudinale et transversale X,Y de l'aéronef 10 sont également représentées ainsi que les directions N,W d'un repère géographique terrestre.

Le cap ψ est ainsi représenté entre la direction longitudinale X de l'aéronef 10 et la direction N du nord. L'angle de route sol *TKₛₒₗ* est représenté entre la direction de la trajectoire *Tₛₒₗ* et la direction N du nord.

On constate que le cap ψ est différent de l'angle de route sol *TKₛₒₗ.* Par suite, le nez et la poutre de queue 14 de l'aéronef 10 étant alignés sur la direction longitudinale X ne sont alors pas alignés avec la trajectoire *Tₛₒₗ.* De même, la vitesse d'avancement *Va* est alignée sur la trajectoire *Tₛₒₗ* et n'est pas parallèle à la direction longitudinale X.

Le système 1 de détermination de la consigne de vitesse air *Vₐᵢᵣ* et de la consigne de vitesse sol *Vₛₒₗ* d'un aéronef à voilure tournante 10 selon l'exposition au vent de l'aéronef 10 est capable de mettre en oeuvre le procédé de détermination de cette consigne de vitesse air *Vₐᵢᵣ* et de cette consigne de vitesse sol *Vₛₒₗ* dont un schéma synoptique est représenté sur la figure 3.

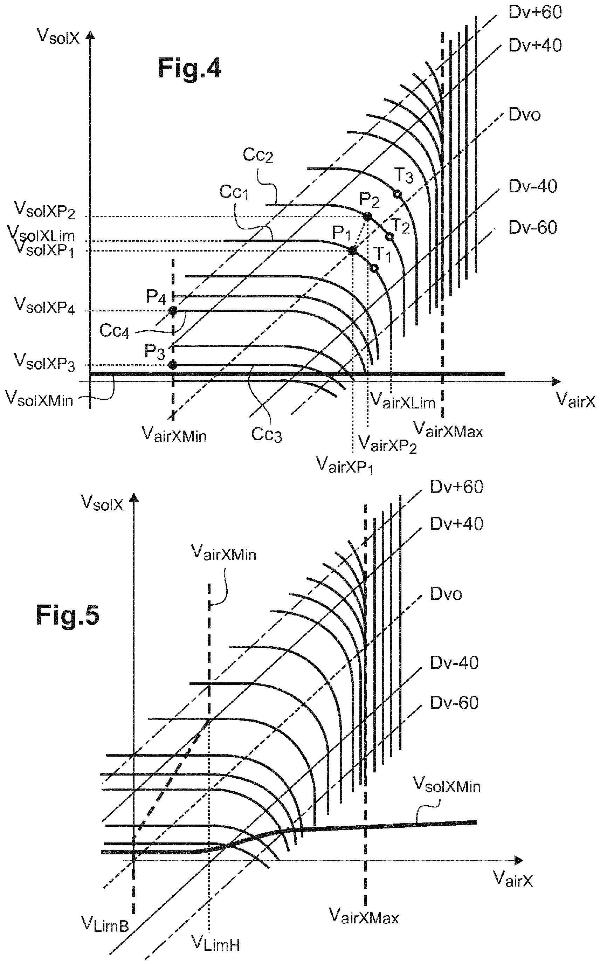

La figure 4 représente un graphique comportant des courbes caractéristiques en vitesses de l'aéronef 10. Sur ce graphique, l'axe des abscisses représente la vitesse air longitudinale *V_{airX}* de l'aéronef 10 et l'axe des ordonnées sa vitesse sol longitudinale *V_{solX}.* Les échelles de graduation sont identiques sur ces axes des abscisses et des ordonnées. Ces courbes caractéristiques en vitesses de l'aéronef 10 permettent de déterminer la vitesse air longitudinale *V_{airX}* et la vitesse sol longitudinale *V_{solX}* de l'aéronef 10 en fonction de l'exposition de l'aéronef 10 au vent et en particulier en fonction de la vitesse longitudinale du vent relatif subi par l'aéronef 10.

Chaque courbe caractéristique en vitesses est constituée par des points de fonctionnement de l'aéronef 10 en vol et correspond à une phase de vol de l'aéronef 10. Chaque point de fonctionnement est caractérisé par une vitesse air longitudinale *V_{airX}* et une vitesse sol longitudinale *V_{solX}* de l'aéronef 10. Chaque point de fonctionnement peut se trouver uniquement sur une seule courbe caractéristique en vitesses.

On constate sur ce graphique que pour de grandes vitesses air longitudinales *V_{airX}* supérieures à une vitesse air longitudinale maximale *V_{airXmax},* les courbes caractéristiques en vitesses de l'aéronef 10 sont des droites verticales correspondant respectivement à une vitesse air longitudinale *V_{airX}* constante. De même, on peut voir sur ce graphique que les courbes caractéristiques en vitesses sont représentées pour des vitesses air longitudinales *V_{airX}* supérieures ou égales à une vitesse air longitudinale minimale *V_{airXMin}.*

En outre, une vitesse sol longitudinale minimale *V_{solXMin}* constituant une limite inférieure pour la vitesse sol longitudinale *V_{solX}* est également représentée sur la figure 4.

Pour des vitesses air longitudinales *V_{airX}* comprises entre la vitesse air longitudinale minimale *V_{airXMin}* et la vitesse air longitudinale maximale *V_{airXMax},* une courbe caractéristique en vitesses de l'aéronef 10 est constituée par un segment horizontal et un segment vertical reliés entre eux par un arc de cercle. Le segment horizontal correspond à une vitesse sol longitudinale *V_{solX}* constante et le segment vertical à une vitesse air longitudinale *V_{airX}* constante.

Ce graphique comporte également des droites de vent parallèles correspondant respectivement à une vitesse longitudinale du vent relatif subi par l'aéronef 10. La droite de vent Dv0 matérialise les situations où la vitesse longitudinale de vent subi par l'aéronef 10 est nulle alors que les droites de vent Dv-60,Dv-40,Dv+40,Dv+60 correspondent respectivement à des vitesses longitudinales de vent de -60 noeuds (-60kt), -40 noeuds (-40kt), +40 noeuds (+40kt) et +60 noeuds (+60kt). Chaque droite de vent a une seule intersection avec une courbe caractéristique en vitesses associant à un point de fonctionnement de l'aéronef 10 une vitesse longitudinale de ce vent subi par l'aéronef 10.

Les vitesses longitudinales du vent qui sont négatives représentent un vent de face subi par l'aéronef 10 alors que celles qui sont positives représentent un vent arrière subi par l'aéronef 10. Pour faciliter la lisibilité de la figure 4, les courbes caractéristiques en vitesses sont représentées pour une plage de vent couvrant des vitesses longitudinales de - 60 kt à +60 kt. Toutefois, ces courbes caractéristiques en vitesses peuvent être étendues pour d'autres vitesses longitudinales du vent relatif subi par l'aéronef 10.

Au cours d'une étape préliminaire 31 du procédé de détermination de la consigne de vitesse air *Vₐᵢᵣ* et de la consigne de vitesse sol *Vₛₒₗ* de l'aéronef, on détermine les courbes caractéristiques en vitesses de l'aéronef 10 représentées sur la figure 4. Ces courbes caractéristiques en vitesses de l'aéronef 10 sont déterminées de manière expérimentale, suite à des vols d'essais effectués par l'aéronef 10, ou bien de manière théorique. Le calculateur 17 utilise l'ensemble de ces courbes caractéristiques en vitesses de l'aéronef 10 qui sont stockées dans la mémoire 18 afin d'être utilisables pour chaque vol de l'aéronef 10.

Puis, au cours d'une étape d'initialisation 32, on identifie, lors d'une phase de vol de l'aéronef 10, par l'intermédiaire du calculateur 17 et en fonction de la vitesse air longitudinale *V_{airX}* et de la vitesse sol longitudinale *V_{solX}* de l'aéronef 10 la courbe caractéristique en vitesses correspondant à cette phase de vol qui devient alors la courbe caractéristique en vitesses initiale associée à cette phase de vol.

Par exemple, la courbe caractéristique en vitesses initiale *Cc₁* est identifiée à partir du point de fonctionnement *P₁* de l'aéronef 10. Ce point de fonctionnement *P₁* qui est l'intersection de la courbe caractéristique en vitesses initiale *Cc₁* et de la droite de vent Dv0 est caractérisé par la vitesse sol longitudinale *V_{solP1},* la vitesse air longitudinale *V_{airP1}* et une vitesse longitudinale du vent nulle. De façon particulière, pour cette vitesse longitudinale de vent nulle, la vitesse sol longitudinale *V_{solP1}* et la vitesse air longitudinale *V_{airP1}* sont identiques.

Ensuite, au cours d'une étape de maintien de cette phase de vol 33, tant que cette phase de vol est conservée, le pilote ne commandant pas sur la direction longitudinale une accélération ou une décélération de l'aéronef 10, le point de fonctionnement de l'aéronef 10 se déplace sur cette courbe caractéristique en vitesses initiale *Cc₁* selon les variations de la vitesse longitudinale du vent subi par l'aéronef 10. Les déplacements de ce point de fonctionnement permettent ainsi de déterminer les consignes de vitesses longitudinales air *V_{airX}* et sol *V_{solX}* de l'aéronef 10 en fonction des variations de la vitesse longitudinale du vent.

Par exemple, à partir du point de fonctionnement *P₁,* si la vitesse longitudinale du vent augmente en valeur signée, c'est-à-dire évolue de manière que l'aéronef 10 subisse par exemple un vent arrière qui se renforce, la vitesse air longitudinale *V_{airX}* doit diminuer et la vitesse sol longitudinale *Vₛₒₗ* doit augmenter jusqu'à une vitesse sol longitudinale constante *V_{solXLim}.* La vitesse air longitudinale *V_{airX}* est supérieure à la vitesse air longitudinale minimale *V_{airXMin}.*

En revanche, à partir de ce point de fonctionnement *P₁,* si la vitesse longitudinale du vent diminue en valeur signée, c'est-à-dire évolue de manière que l'aéronef 10 subisse par exemple un vent de face qui se renforce, la vitesse sol longitudinale *V_{solX}* doit diminuer et la vitesse air longitudinale *V_{airX}* doit augmenter jusqu'à une vitesse air constante *V_{airXLim}.*

Avantageusement, cette courbe caractéristique en vitesses initiale *Cc₁* permet ainsi de définir la consigne de vitesse longitudinale d'avancement *Vc* du pilote automatique 15 à utiliser selon la vitesse longitudinale du vent relatif subi par l'aéronef 10.

En effet, chaque courbe caractéristique en vitesses, pour des vitesses air longitudinales *V_{airX}* inférieures ou égales à la vitesse air longitudinale maximale *V_{airXMax},* comporte un point de transition T1, T2, T3 situé au milieu de l'arc de cercle reliant les deux segments. Pour les points de fonctionnement ayant une vitesse sol longitudinale *V_{solX}* inférieure à celle du point de transition T1, T2, T3, la consigne de vitesse d'avancement longitudinale *Vc* du pilote automatique 15 est égale à la vitesse air longitudinale *V_{airX}* du point de fonctionnement de l'aéronef 10. En revanche, pour les points de fonctionnement ayant une vitesse sol longitudinale *V_{solX}* supérieure à celle du point de transition T1, T2, T3, la consigne de vitesse d'avancement longitudinale *Vc* du pilote automatique 15 est égale à la vitesse sol longitudinale *V_{solX}* du point de fonctionnement de l'aéronef 10.

Ainsi, à partir du point de fonctionnement *P₁,* si la vitesse longitudinale du vent augmente en valeur signée, alors la vitesse sol longitudinale *V_{solX}* reste supérieure à celle du point de transition T1. La consigne de vitesse d'avancement longitudinale *Vc* est alors égale à la vitesse sol longitudinale *V_{solX}.* En revanche, si la vitesse longitudinale du vent diminue en valeur signée, alors la consigne de vitesse d'avancement longitudinale *Vc* est toujours égale à la vitesse sol longitudinale *V_{solX}* tant que le point de fonctionnement *P₁* n'a pas dépassé le point de transition T1. Au-delà de ce point de transition T1, la vitesse sol longitudinale *V_{solX}* est inférieure à celle du point de transition T1 et la consigne de vitesse d'avancement longitudinale *Vc* est égale à la vitesse air longitudinale *V_{airX}.*

En outre, les courbes caractéristiques en vitesses correspondant à des vitesses air longitudinales *V_{airX}* supérieures à la vitesse air longitudinale maximale *V_{airXMax}* sont des droites et ne comportent pas de points de transition. En effet, pour de grandes vitesses air longitudinales *V_{airX}* qui correspondent en général à des vols de croisière prolongés, la consigne de vitesse d'avancement longitudinale *Vc* du pilote automatique 15 de l'aéronef 10 est généralement égale à la vitesse air longitudinale *V_{airX}.* La consigne de vitesse d'avancement longitudinale *Vc* du pilote automatique 15 est alors égale à la vitesse air longitudinale *V_{airX}* de la courbe caractéristique en vitesses indépendamment de la vitesse longitudinale du vent subi par l'aéronef 10.

Les variations de la vitesse longitudinale du vent subi par l'aéronef 10 peuvent être consécutives à un changement de la direction du vent ou de son module ou bien à un changement de l'orientation de l'aéronef 10 par rapport au vent. Ce changement de l'orientation de l'aéronef 10 par rapport au vent peut faire suite à la réalisation d'un virage par l'aéronef 10 ou bien un changement du cap ψ de l'aéronef 10.

La réalisation de ce virage ou du changement du cap ψ peut être effectuée par le pilote automatique 15 ainsi que par une action du pilote par transparence par l'intermédiaire d'un manche de commande de pas cyclique 21, d'un beep de roulis, ou bien d'un palonnier 23, la phase de vol de l'aéronef 10 étant conservée, l'aéronef ne subissant ni accélération ni décélération dans la direction de sa trajectoire.

Enfin, au cours d'une étape de changement de phase de vol 34, suite à une commande par le pilote sur la direction longitudinale une accélération ou décélération de l'aéronef 10, on identifie une nouvelle courbe caractéristique en vitesses sur laquelle se trouve alors le nouveau point de fonctionnement courant de l'aéronef 10 une fois que les vitesses longitudinales air *V_{airX}* et sol *V_{solX}* sont stabilisées et sensiblement constantes.

Par exemple, à partir du point de fonctionnement *P₁,* si la consigne de vitesse longitudinale d'avancement *Vc* du pilote automatique 15, qui est égale à la vitesse sol longitudinale *V*_{*so*/}*_{XP1},* augmente suite à une action du pilote par transparence, l'aéronef 10 quitte sa phase de vol et la vitesse sol longitudinale *V_{solX}* est augmentée jusqu'à un nouveau point de fonctionnement *P₂.* Ce nouveau point de fonctionnement *P₂* correspondant à une nouvelle phase de vol de l'aéronef 10 et est caractérisée par une nouvelle vitesse sol longitudinale *V_{solXP2}* et une nouvelle vitesse air longitudinale *V_{airXP2}.* Par suite, la vitesse longitudinale du vent relatif subi par l'aéronef 10 est également modifiée. Le nouveau point de fonctionnement *P₂* permet alors d'identifier la nouvelle courbe caractéristique en vitesses *Cc₂* ainsi que la nouvelle vitesse longitudinale du vent relatif subi par l'aéronef 10. La consigne de vitesse longitudinale d'avancement *Vc* du pilote automatique 15 relative à cette nouvelle phase de vol est alors égale à la nouvelle vitesse sol longitudinale *V_{solXP2}.*

Tant que cette nouvelle phase de vol est conservée, le pilote ne commandant sur la direction longitudinale aucune accélération ou aucune décélération de l'aéronef 10, le point de fonctionnement de l'aéronef 10 se déplace sur cette nouvelle courbe caractéristique en vitesses *Cc₂* selon les variations de la vitesse longitudinale du vent subi par l'aéronef 10.

Par ailleurs, ces courbes caractéristiques en vitesses permettent de maintenir la vitesse air longitudinale *V_{airX}* supérieure à une vitesse air longitudinale minimale *V_{airXMin}.* Le maintien de la vitesse air longitudinale *V_{airX}* supérieure à cette vitesse air longitudinale minimale *V_{airXMin}* malgré une possible augmentation de la vitesse sol longitudinale *V_{solX}* due à un renforcement du vent arrière subi par l'aéronef 10 évite que l'aéronef 10 ne décélère dans une masse d'air brassée par son rotor principal 11 pouvant engendrer une situation dangereuse.

De plus, à partir d'un point de fonctionnement *P₃* correspondant à une vitesse air longitudinale *V_{airXP3}* égale à la vitesse air longitudinale minimale *V_{airXMin}* et à une consigne de vitesse longitudinale d'avancement *Vc* égale à la vitesse sol *V_{solXP3},* lorsque l'aéronef subit un vent arrière qui se renforce, la courbe caractéristique en vitesses *Cc₃* est remplacée par une nouvelle courbe caractéristique en vitesses *Cc₄*. En effet, la vitesse air longitudinale *V_{airXP3}* ne peut pas être réduite car elle est déjà égale à la vitesse air longitudinale minimale *V_{airXMin}* pour accompagner la baisse de la vitesse longitudinale du vent correspondant à un renforcement de ce vent arrière. De fait, la vitesse sol longitudinale *V_{solXP3}* de l'aéronef doit augmenter jusqu'à la vitesse sol longitudinale *V_{solXP4}* afin que la vitesse air longitudinale *V_{airXP4}* reste égale à la vitesse air longitudinale minimale *V_{airXMin},* le point de fonctionnement *P₃* devenant alors le point de fonctionnement *P₄*.

De même, lorsque la vitesse sol longitudinale *V_{solX}* est égale à la vitesse sol longitudinale minimale *V_{solXMin}* et que la vitesse longitudinale du vent relatif subi par l'aéronef 10 diminue en valeur signée, correspondant par exemple à un vent de face qui se renforce, la courbe caractéristique en vitesses à prendre en compte change afin que la vitesse air longitudinale *V_{airX}* augmente et que la vitesse sol longitudinale *V_{solX}* soit toujours égale à la vitesse sol longitudinale minimale *V*_{*solX*Min}.

En outre, afin d'éviter dans ces deux cas des changements intempestifs de courbes caractéristiques en vitesses à la moindre fluctuation de la vitesse longitudinale du vent subi par l'aéronef 10, un seuil de protection est pris en compte. La variation de la vitesse longitudinale du vent est par exemple comparée à un seuil de protection fixe ou bien à un seuil à hystérésis.

Par ailleurs, la vitesse air longitudinale minimale *V_{airXMin}* et la vitesse sol longitudinale minimale *V_{solXMin}* peuvent être des valeurs fixes comme représenté sur la figure 4. Cette vitesse air longitudinale minimale *V_{airXMin}* et cette vitesse sol longitudinale minimale *V_{solXMin}* peuvent également être variables en fonction du module de la vitesse totale du vent relatif subi par l'aéronef 10 comme représenté sur la figure 5.

Par exemple, pour des modules de la vitesse totale du vent supérieurs ou égaux à 40 kt, la vitesse air longitudinale minimale *V_{airXMin}* est constante et égale à une valeur limite haute *V_{LimH}.* La vitesse air longitudinale minimale *V_{airXMin}* est constante et égale à une valeur limite basse *V_{LimB}* pour des modules de la vitesse totale du vent inférieurs ou égaux à 10 kt. Cette vitesse air longitudinale minimale *V_{airXMin}* décroît linéairement à partir de la valeur limite haute *V_{LimH}* jusqu'à la valeur limite basse *V_{LimB}* avec la baisse du module de la vitesse longitudinale du vent entre 40 kt et à 10 kt.

Notamment, l'aéronef 10 équipé de ce système 1 de détermination de la vitesse air longitudinale *V_{airX}* et de la vitesse sol longitudinale *V_{solX}* n'est pas limité à l'aéronef 10 représenté sur la figure 1. Cet aéronef 10 peut par exemple comporter deux rotors principaux ou bien être un hélicoptère hybride.

De plus, le nombre de pales principales 111,112,113 d'un rotor principal 11 ainsi que le nombre de pales secondaires 121,122,123,124 d'un rotor arrière 12 ne sont pas limités à l'exemple d'aéronef 10 représenté sur la figure 1. Un rotor principal 11 ou un rotor arrière 12 peut en effet comporter deux, trois, quatre, cinq pales, voire plus de cinq pales.

## Revendications

1. Procédé de détermination de la consigne de la vitesse air longitudinale et de la consigne de la vitesse sol longitudinale initialisées à un point de fonctionnement courant d'un aéronef à voilure tournante (10) selon l'exposition au vent dudit aéronef (10), ledit aéronef (10) volant selon une trajectoire *Tₛₒₗ* par rapport au sol avec une vitesse d'avancement Va, ladite vitesse d'avancement Va pouvant être déterminée par rapport au sol pour former une vitesse sol *Vₛₒₗ* et par rapport à l'air pour former une vitesse air *Vₐᵢᵣ,* une direction longitudinale X s'étendant de l'arrière dudit aéronef (10) vers l'avant dudit aéronef (10), une direction d'élévation Z s'étendant de bas en haut perpendiculairement à ladite direction longitudinale X et une direction transversale Y s'étendant de droite à gauche perpendiculairement auxdites directions longitudinale X et d'élévation Z, ledit aéronef (10) comportant :
- un pilote automatique (15) générateur d'ordres de commande selon des modes prédéfinis de fonctionnement et selon des consignes de vol, lesdits ordres de commande pouvant provoquer des mouvements dudit aéronef (10) en rotation et/ou en translation selon lesdites directions (X,Y,Z),
- au moins un moyen de commande permettant à un pilote dudit aéronef (10) de piloter par transparence ledit aéronef (10) lors du fonctionnement dudit pilote automatique (15),
- au moins un calculateur (17) et
- au moins une mémoire (18) stockant des courbes caractéristiques en vitesses dudit aéronef (10),
chaque courbe caractéristique en vitesses correspondant à une phase de vol dudit aéronef (10) et définissant une consigne de la vitesse sol longitudinale et une consigne de la vitesse air longitudinale correspondant à des points de fonctionnement dudit aéronef (10) en fonction d'une vitesse longitudinale du vent relatif subi par ledit aéronef (10), chaque point de fonctionnement étant **caractérisé par** ladite consigne de ladite vitesse sol longitudinale et ladite consigne de ladite vitesse air longitudinale, dans un repère avec en ordonnée une vitesse sol longitudinale *V_{solX}* de l'aéronef et en abscisse sa vitesse air longitudinale *V_{airX},* une phase de vol correspondant à un vol dudit aéronef (10) au cours duquel un pilote dudit aéronef (10) ne commande sur ladite direction longitudinale X aucune accélération ni décélération dudit aéronef (10),
**caractérisé en ce que**
- au cours d'une étape d'initialisation, on identifie pour une phase de vol courante dudit aéronef (10) une courbe caractéristique en vitesses initiale sur laquelle se trouve ledit point de fonctionnement courant dudit aéronef (10),
- on détermine pour ladite phase de vol courante lesdites consignes desdites vitesses longitudinales air et sol dudit aéronef (10) en fonction de la variation de ladite vitesse totale du vent sur ladite direction longitudinale X afin que ledit point de fonctionnement courant dudit aéronef (10) se déplace sur ladite courbe caractéristique en vitesses initiale, avec un basculement progressif d'un maintien d'une vitesse sol longitudinale *Vₛₒₗₓ* dudit aéronef (10) aux basses vitesses d'avancement vers un maintien d'une vitesse air longitudinale *Vₐᵢᵣₓ* dudit aéronef (10) aux hautes vitesses d'avancement et
- suite à une commande par ledit pilote sur ladite direction longitudinale d'une accélération ou d'une décélération dudit aéronef (10), on identifie une nouvelle courbe caractéristique en vitesses sur laquelle se trouve ledit point de fonctionnement courant dudit aéronef (10) une fois que lesdites vitesses longitudinales air *V_{airX}* et sol *V_{solX}* dudit aéronef (10) sont stabilisées et sensiblement constantes.

2. Procédé selon la revendication 1,
**caractérisé en ce que** l'on applique audit pilote automatique (15) une consigne de vitesse d'avancement longitudinale *Vc* égale à ladite consigne de ladite vitesse sol longitudinale correspondant audit point de fonctionnement courant sur ladite courbe caractéristique ou bien ladite consigne de ladite vitesse air longitudinale correspondant audit point de fonctionnement courant sur ladite courbe caractéristique selon ladite vitesse longitudinale dudit vent.

3. Procédé selon l'une quelconque des revendications 1 à 2,
**caractérisé en ce que** chaque courbe caractéristique en vitesses est constituée par un premier segment horizontal correspondant à une consigne de ladite vitesse sol longitudinale constante, un arc de cercle et un second segment vertical correspondant à une consigne de ladite vitesse air longitudinale constante.

4. Procédé selon la revendication 3,
**caractérisé en ce que** ladite consigne de vitesse d'avancement longitudinale *Vc* appliquée au pilote automatique est égale à ladite consigne de ladite vitesse sol longitudinale dudit point de fonctionnement lorsque ledit point de fonctionnement est situé sur ledit premier segment ou bien sur une première partie dudit arc de cercle située entre ledit premier segment et un point de transition dudit arc de cercle, et ladite consigne de vitesse d'avancement longitudinale *Vc* appliquée au pilote automatique est égale à ladite consigne de ladite vitesse air longitudinale dudit point de fonctionnement lorsque ledit point de fonctionnement est situé sur ledit second segment ou bien sur une seconde partie dudit arc de cercle située entre ledit point de transition dudit arc de cercle et ledit second segment.

5. Procédé selon l'une quelconque des revendications 1 à 4,
**caractérisé en ce que** l'on applique audit pilote automatique (15) ladite consigne de vitesse longitudinale d'avancement *Vc* qui est égale à ladite consigne de ladite vitesse air longitudinale indépendamment de ladite vitesse longitudinale dudit vent relatif subi par ledit aéronef (10) lorsque ladite vitesse air longitudinale *V_{airX}* est supérieure à une vitesse air longitudinale maximale *V*_{*airX*Max}*.*

6. Procédé selon l'une quelconque des revendications 1 à 5,
**caractérisé en ce que** ladite consigne de ladite vitesse sol longitudinale est supérieure ou égale à une vitesse sol longitudinale minimale *V*_{*solX*Min}*.*

7. Procédé selon la revendication 6,
**caractérisé en ce que**, lorsque ladite consigne de ladite vitesse sol longitudinale est égale à une vitesse sol longitudinale minimale *V*_{*solX*Min} et que ladite vitesse longitudinale dudit vent relatif subi par ledit aéronef (10) diminue en valeur signée, ladite courbe caractéristique en vitesses dudit aéronef (10) à prendre en compte change, une consigne de vitesse longitudinale d'avancement *Vc* appliquée audit pilote automatique (15) étant telle que ladite consigne de ladite vitesse air longitudinale augmente et ladite consigne de ladite vitesse sol longitudinale est égale à ladite vitesse sol longitudinale minimale *V*_{*solX*Min}*.*

8. Procédé selon l'une quelconque des revendications 1 à 7,
**caractérisé en ce que** ladite consigne de ladite vitesse air longitudinale est supérieure ou égale à une vitesse air longitudinale minimale *V*_{*airX*Min} afin d'éviter que ledit aéronef (10) évolue dans une masse d'air déjà brassée par un rotor principal (11) dudit aéronef (10) risquant alors de générer une perte de portance dudit rotor principal (11).

9. Procédé selon la revendication 8,
**caractérisé en ce que** ladite vitesse air minimale *V*_{*airX*Min} est variable en fonction du module de ladite vitesse totale du vent relatif subi par ledit aéronef (10).

10. Procédé selon l'une quelconque des revendications 8 à 9,
**caractérisé en ce que**, lorsque ladite consigne de ladite vitesse air longitudinale est égale à ladite vitesse air longitudinale minimale *V*_{*airX*Min} et que ladite vitesse longitudinale dudit vent relatif subi par ledit aéronef (10) augmente en valeur signée, ladite courbe caractéristique en vitesses dudit aéronef (10) à prendre en compte change, une consigne de vitesse longitudinale d'avancement *Vc* appliquée audit pilote automatique (15) étant telle que ladite consigne de ladite vitesse sol longitudinale augmente et ladite consigne de ladite vitesse air longitudinale est égale à ladite vitesse air longitudinale minimale *V*_{*airX*Min}*.*

11. Procédé selon l'une quelconque des revendications 1 à 10,
**caractérisé en ce que**, lorsque ladite consigne de ladite vitesse air longitudinale dudit aéronef (10) est égale à ladite vitesse air longitudinale minimale *V*_{*airX*Min} ou bien lorsque ladite consigne de ladite vitesse sol longitudinale est égale à une vitesse sol longitudinale minimale *V*_{*solX*Min}*,* on change ladite courbe caractéristique en vitesses à prendre en compte lorsqu'une variation de ladite vitesse longitudinale dudit vent relatif subi par ledit aéronef (10) est supérieure ou égale à un seuil de protection.

12. Procédé selon l'une quelconque des revendications 1 à 10,
**caractérisé en ce que**, lorsque ladite consigne de ladite vitesse air longitudinale est égale à ladite vitesse air longitudinale minimale *V*_{*airX*Min} ou bien lorsque ladite consigne de ladite vitesse sol longitudinale est égale à une vitesse sol longitudinale minimale *V*_{*solX*Min}*,* on change ladite courbe caractéristique en vitesses à prendre en compte lorsqu'une vitesse longitudinale dudit vent relatif subi par ledit aéronef (10) varie selon un seuil à hystérésis.

13. Procédé selon la revendication 8,
**caractérisé en ce que**, lorsque ladite consigne de ladite vitesse air longitudinale est égale à ladite vitesse air longitudinale minimale *V*_{*airX*Min} et que ledit pilote dudit aéronef (10) réduit volontairement ladite vitesse air longitudinale *V_{airX}* dudit aéronef (10) en-dessous de ladite vitesse air longitudinale minimale *V_{airXMin},* une nouvelle vitesse air longitudinale minimale *V_{airXMin2}* est définie comme étant égale à ladite vitesse air longitudinale V_{airX} choisie par le pilote réduite d'une valeur prédéterminée V_{δ} et remplace ladite vitesse air longitudinale minimale *V_{airXMin}* jusqu'à ce que ladite consigne de ladite vitesse air longitudinale soit supérieure ou égale à ladite vitesse air longitudinale minimale *V*_{*airX*Min} augmentée de ladite valeur prédéterminée V_{δ}.

14. Procédé selon la revendication 6,
**caractérisé en ce que**, lorsque ladite consigne de ladite vitesse sol longitudinale est égale à ladite vitesse sol longitudinale minimale *V*_{*solX*Min} et que ledit pilote dudit aéronef (10) réduit volontairement ladite vitesse sol longitudinale *V_{solX}* en-dessous de ladite vitesse sol longitudinale minimale *V_{solXMin,}* on assure un maintien de ladite vitesse sol longitudinale *V_{solX}* selon les commandes effectuées par ledit pilote.

15. Système (1) de détermination de la consigne de la vitesse air longitudinale et de la consigne de la vitesse sol longitudinale initialisées à un point de fonctionnement courant d'un aéronef à voilure tournante (10) selon l'exposition au vent dudit aéronef (10), ledit aéronef (10) volant selon une trajectoire *Tₛₒₗ* par rapport au sol avec une vitesse d'avancement *Va,* ladite vitesse d'avancement *Va* pouvant être déterminée par rapport au sol pour former une vitesse sol *Vₛₒₗ* et par rapport à l'air pour former une vitesse air *Vₐᵢᵣ,* une direction longitudinale X s'étendant de l'arrière dudit aéronef (10) vers l'avant dudit aéronef (10), une direction d'élévation Z s'étendant de bas en haut perpendiculairement à ladite direction longitudinale X et une direction transversale Y s'étendant de droite à gauche perpendiculairement auxdites directions longitudinale X et d'élévation Z,
- ledit aéronef (10) comportant :
o un pilote automatique (15) générateur d'ordres de commande selon des modes prédéfinis de fonctionnement et selon des consignes de vol, lesdits ordres de commande pouvant provoquer des mouvements dudit aéronef (10) en rotation et/ou en translation selon lesdites directions (X,Y,Z),
o au moins un moyen de commande permettant au pilote de piloter par transparence ledit aéronef (10) lors du fonctionnement dudit pilote automatique (15),
- ledit système (1) de détermination de la consigne de la vitesse air longitudinale et de la consigne de la vitesse sol longitudinale initialisées à un point de fonctionnement courant d'un aéronef (10) comportant :
∘ au moins un calculateur (17), et
∘ au moins une mémoire (18),
**caractérisé en ce que** ledit système (1) de détermination de la consigne de la vitesse air longitudinale et de la consigne de la vitesse sol longitudinale met en oeuvre le procédé selon l'une quelconque des revendications 1 à 14.

## Patentansprüche

1. Verfahren zur Bestimmung der Sollfluggeschwindigkeit in Längsrichtung und der Sollgeschwindigkeit über Grund in Längsrichtung, welches in einem aktuellen Betriebspunkt des Drehflügelflugzeugs (10) gemäß der Windexposition des Flugzeugs (10) gestartet wird, wobei das Flugzeug (10) entlang einer Flugbahn Tₛₒₗ relativ zum Grund mit einer Vortriebsgeschwindigkeit Va fliegt, wobei die Vortriebsgeschwindigkeit Va relativ zum Grund bestimmt werden kann, um eine Geschwindigkeit über Grund Vₛₒₗ zu bilden, und relativ zur Luft, um eine Fluggeschwindigkeit Vₐᵢᵣ zu bilden, wobei eine Längsrichtung X sich vom hinteren Teil des Flugzeugs (10) zum vorderen Teil des Flugzeugs (10) erstreckt, eine Höhenrichtung Z sich von unten nach oben senkrecht zu der Längsrichtung X und zu einer Querrichtung Y erstreckt, die sich von rechts nach links senkrecht zu der Längsrichtung X und der Höhenrichtung Z erstreckt, wobei das Flugzeug (10) aufweist:
- einen Autopiloten (15), der Steuerbefehle gemäß vorbestimmten Betriebsmodi und gemäß Flugsollwerten erzeugt, wobei die Steuerbefehle Bewegungen des Flugzeugs (10) in Drehrichtung und/oder in Translationsrichtung gemäß den Richtungen X, Y, Z bewirken können,
- mindestens ein Steuermittel, welches es einem Piloten des Flugzeugs (10) erlaubt, das Flugzeug (10) durch eine Übersteuerung während des Betriebs des Autopiloten (15) zu steuern,
- mindestens einen Rechner (17) und
- mindestens einen Speicher (18), der charakteristische Geschwindigkeitskurven des Flugzeugs (10) speichert,
wobei jede charakteristische Geschwindigkeitskurve einer Flugphase des Flugzeugs (10) entspricht und einen Sollwert der Geschwindigkeit über Grund in Längsrichtung und einen Sollwert der Fluggeschwindigkeit in Längsrichtung definiert, die den Betriebspunkten des Flugzeugs (10) in Abhängigkeit von einer Relativgeschwindigkeit in Längsrichtung des Winds, welchem das Flugzeugs (10) ausgesetzt ist, entspricht, wobei jeder Betriebspunkt charakterisiert wird durch den Sollwert der Geschwindigkeit über Grund in Längsrichtung und durch den Sollwert der Fluggeschwindigkeit in Längsrichtung, in einem Koordinatensystem mit einer Geschwindigkeit über Grund in Längsrichtung V_{solX} des Flugzeugs auf der Ordinate aufgetragen und mit seiner Fluggeschwindigkeit in Längsrichtung V_{airX} auf der Abszisse aufgetragen, wobei eine Flugphase einem Flug des Flugzeugs (10) entspricht, während dem ein Pilot des Flugzeugs (10) in Längsrichtung X weder eine Beschleunigung noch eine Verzögerung des Flugzeugs (10) befiehlt,
**dadurch gekennzeichnet, dass**
- während einer Startphase für eine aktuelle Flugphase des Flugzeugs (10) eine charakteristische Kurve ursprünglicher Geschwindigkeiten identifiziert wird, auf der sich der aktuelle Betriebspunkt des Flugzeugs (10) befindet,
- für die aktuelle Flugphase die Sollwerte der Fluggeschwindigkeit in Längsrichtung und der Geschwindigkeit über Grund in Längsrichtung des Flugzeugs (10) in Abhängigkeit von der Veränderung der Gesamtgeschwindigkeit des Winds in der Längsrichtung X bestimmt wird, damit der aktuelle Betriebspunkt des Flugzeugs (10) sich auf der charakteristischen Kurve der ursprünglichen Geschwindigkeiten bewegt, mit einem progressiven Umsteuern eines Haltens einer Geschwindigkeit über Grund in Längsrichtung Vₛₒₗₓ des Flugzeugs (10) bei niedrigen Vortriebsgeschwindigkeiten zu einem Halten einer Fluggeschwindigkeit in Längsrichtung Vₐᵢᵣₓ des Flugzeugs (10) bei hohen Vortriebsgeschwindigkeiten und
- nach einem Befehl einer Beschleunigung oder einer Verzögerung des Flugzeugs (10) in Längsrichtung durch den Piloten eine neue charakteristische Geschwindigkeitskurve identifiziert wird, auf der sich der aktuelle Betriebspunkt des Flugzeugs (10) befindet, wenn die Fluggeschwindigkeit V_{airX} in Längsrichtung und die Geschwindigkeit über Grund V_{solX} des Flugzeugs (10) stabilisiert und im Wesentlichen konstant sind.

2. Verfahren nach Anspruch 1,
**dadurch gekennzeichnet, dass** dem Autopiloten (15) ein Sollwert der Vortriebsgeschwindigkeit in Längsrichtung Vc eingegeben wird, der gleich dem Sollwert der Geschwindigkeit über Grund in Längsrichtung ist, der dem aktuellen Betriebspunkt auf der charakteristischen Kurve entspricht, oder gleich dem Sollwert der Fluggeschwindigkeit in Längsrichtung, der dem aktuellen Betriebspunkt auf der charakteristischen Kurve entsprechend der Windgeschwindigkeit in Längsrichtung entspricht.

3. Verfahren nach einem der Ansprüche 1 bis 2,
**dadurch gekennzeichnet, dass** jede charakteristische Geschwindigkeitskurve aus einem ersten horizontalen Abschnitt gebildet wird, der einem Sollwert der konstanten Geschwindigkeit über Grund in Längsrichtung entspricht, einem Kreisbogen, und einem zweiten vertikalen Abschnitt, der einem Sollwert der konstanten Fluggeschwindigkeit in Längsrichtung entspricht.

4. Verfahren nach Anspruch 3,
**dadurch gekennzeichnet, dass** der Sollwert der Vortriebsgeschwindigkeit in Längsrichtung Vc, der dem Autopiloten eingegeben wurde, gleich dem Sollwert der Geschwindigkeit über Grund in Längsrichtung des Betriebspunkts ist, während der Betriebspunkt in dem ersten Abschnitt liegt, oder in einem ersten Teil des Kreisbogens, der zwischen dem ersten Abschnitt und einem Übergangspunkt des Kreisbogens liegt, wobei der Sollwert der Vortriebsgeschwindigkeit in Längsrichtung Vc, der dem Autopiloten eingegeben wurde, gleich dem Sollwert der Fluggeschwindigkeit in Längsrichtung des Betriebspunkts ist, während der Betriebspunkt in dem zweiten Abschnitt liegt oder in einem zweiten Teil des Kreisbogens, der zwischen dem Übergangspunkt des Kreisbogens und dem zweiten Abschnitt liegt.

5. Verfahren nach einem der Ansprüche 1 bis 4,
**dadurch gekennzeichnet, dass** dem Autopiloten (15) der Sollwert der Vortriebsgeschwindigkeit in Längsrichtung Vc eingegeben wird, der gleich dem Sollwert der Fluggeschwindigkeit in Längsrichtung ist, unabhängig von der Relativgeschwindigkeit des Winds in Längsrichtung, dem das Flugzeug (10) ausgesetzt ist, wenn die Fluggeschwindigkeit in Längsrichtung V_{airX} größer ist als eine maximale Fluggeschwindigkeit in Längsrichtung V_{airXMax}.

6. Verfahren nach einem der Ansprüche 1 bis 5,
**dadurch gekennzeichnet, dass** der Sollwert der Geschwindigkeit über Grund in Längsrichtung größer oder gleich einer minimalen Geschwindigkeit über Grund in Längsrichtung V_{solXMin} ist.

7. Verfahren nach Anspruch 6,
**dadurch gekennzeichnet, dass**, wenn der Sollwert der Geschwindigkeit über Grund in Längsrichtung gleich einer minimalen Geschwindigkeit über Grund in Längsrichtung V_{solXMin} ist, und wenn die Relativgeschwindigkeit in Längsrichtung des Winds, dem das Flugzeug (10) ausgesetzt ist, in ihrem vorzeichenbehafteten Wert sinkt, sich die zu berücksichtigende charakteristische Kurve der Geschwindigkeiten des Flugzeugs (10) ändert, wobei ein Sollwert der Vortriebsgeschwindigkeit in Längsrichtung Vc, der dem Autopiloten (15) eingegeben wurde, derart ist, dass der Sollwert der Fluggeschwindigkeit in Längsrichtung steigt, und der Sollwert der Geschwindigkeit über Grund in Längsrichtung gleich der minimalen Geschwindigkeit über Grund in Längsrichtung V_{solXMin} ist.

8. Verfahren nach einem der Ansprüche 1 bis 7,
**dadurch gekennzeichnet, dass** der Sollwert der Fluggeschwindigkeit in Längsrichtung größer oder gleich einer minimalen Fluggeschwindigkeit in Längsrichtung V_{airXMin} ist, um zu verhindern, dass das Flugzeug (10) sich in einer Luftmasse bewegt, die schon von einem Hauptrotor (11) des Flugzeugs (10) aufgewühlt wurde, wodurch die Gefahr besteht, dass ein Auftriebsverlust des Hauptrotors (11) erzeugt wird.

9. Verfahren nach Anspruch 8,
**dadurch gekennzeichnet, dass** die minimale Fluggeschwindigkeit V_{airXMin} variabel ist in Abhängigkeit von dem Modul der Gesamtrelativgeschwindigkeit des Winds, dem das Flugzeug (10) ausgesetzt ist.

10. Verfahren nach einem der Ansprüche 8 bis 9,
**dadurch gekennzeichnet, dass**, wenn der Sollwert der Fluggeschwindigkeit in Längsrichtung gleich der minimalen Fluggeschwindigkeit in Längsrichtung V_{airXMin} ist, und wenn die Relativgeschwindigkeit in Längsrichtung des Winds, dem das Flugzeug (10) ausgesetzt ist, in ihrem vorzeichenbehafteten Wert steigt, sich die charakteristische Kurve der Geschwindigkeiten des Flugzeugs (10), die zu berücksichtigen ist, ändert, ein Sollwert der Vortriebsgeschwindigkeit in Längsrichtung Vc, die dem Autopiloten (15) eingegeben wurde, derart ist, dass der Sollwert der Geschwindigkeit über Grund in Längsrichtung steigt und der Sollwert der Fluggeschwindigkeit in Längsrichtung gleich der minimalen Fluggeschwindigkeit in Längsrichtung V_{airXMin} ist.

11. Verfahren nach einem der Ansprüche 1 bis 10,
**dadurch gekennzeichnet, dass**, wenn der Sollwert der Fluggeschwindigkeit in Längsrichtung des Flugzeugs (10) gleich der minimalen Fluggeschwindigkeit V_{airXMin} ist, oder wenn der Sollwert der Geschwindigkeit über Grund in Längsrichtung gleich einer minimalen Geschwindigkeit über Grund in Längsrichtung V_{solxMin} ist, die charakteristische Geschwindigkeitskurve, die zu berücksichtigen ist, geändert wird, wenn eine Änderung der Relativgeschwindigkeit des Winds in Längsrichtung, dem das Flugzeug (10) ausgesetzt ist, größer oder gleich einem Schutzschwellenwert ist.

12. Verfahren nach einem der Ansprüche 1 bis 10,
**dadurch gekennzeichnet, dass**, wenn der Sollwert der Fluggeschwindigkeit in Längsrichtung gleich der minimalen Fluggeschwindigkeit in Längsrichtung V_{airXMin} ist, oder wenn der Sollwert der Geschwindigkeit über Grund in Längsrichtung gleich einer minimalen Geschwindigkeit über Grund in Längsrichtung V_{solXMin} ist, die charakteristische zu berücksichtigende Geschwindigkeitskurve geändert wird, wenn eine Relativgeschwindigkeit des Winds in Längsrichtung, dem das Flugzeug (10) ausgesetzt ist, sich gemäß einem mit einer Hysterese behafteten Schwellenwert ändert.

13. Verfahren nach Anspruch 8,
**dadurch gekennzeichnet, dass**, wenn der Sollwert der Fluggeschwindigkeit in Längsrichtung gleich der minimalen Fluggeschwindigkeit in Längsrichtung V_{airXMin} ist, und wenn der Pilot des Flugzeugs (10) absichtlich die Fluggeschwindigkeit in Längsrichtung V_{airX} des Flugzeugs (10) unter die minimale Fluggeschwindigkeit in Längsrichtung V_{airXMin} reduziert, eine neue minimale Fluggeschwindigkeit in Längsrichtung V_{airXMin2} definiert wird, die gleich der von dem Piloten gewählten reduzierten Fluggeschwindigkeit in Längsrichtung V_{airX} reduziert um einen vorbestimmten Wert V_{δ} ist und die minimale Fluggeschwindigkeit in Längsrichtung V_{airXMin} ersetzt, bis der Sollwert der Fluggeschwindigkeit in Längsrichtung größer oder gleich der minimalen Fluggeschwindigkeit in Längsrichtung V_{airXMin} erhöht um den vorbestimmten Wert V_{δ} ist.

14. Verfahren nach Anspruch 6,
**dadurch gekennzeichnet, dass**, wenn der Sollwert der Geschwindigkeit über Grund in Längsrichtung gleich der minimalen Geschwindigkeit über Grund in Längsrichtung V_{solXMin} ist, und wenn der Pilot des Flugzeugs (10) absichtlich die Geschwindigkeit über Grund in Längsrichtung V_{solX} unter die minimale Geschwindigkeit über Grund in Längsrichtung V_{solXMin} reduziert, ein Halten der Geschwindigkeit über Grund in Längsrichtung Vₛₒₗ gemäß den von dem Piloten ausgeführten Steuerbefehlen sichergestellt wird.

15. System (1) zur Bestimmung des Sollwerts der Fluggeschwindigkeit in Längsrichtung und des Sollwerts der Geschwindigkeit über Grund in Längsrichtung, welche an einem aktuellen Betriebspunkt eines Drehflügelflugzeugs (10) gemäß der Windexposition des Flugzeugs (10) gestartet wird, wobei das Flugzeug (10) entlang einer Flugbahn Tₛₒₗ relativ zum Boden mit einer Vortriebsgeschwindigkeit Va fliegt, wobei die Vortriebsgeschwindigkeit Va relativ zum Grund bestimmt werden kann, um eine Geschwindigkeit über Grund Vₛₒₗ zu bilden, und relativ zur Luft, um eine Fluggeschwindigkeit Vₐᵢᵣ zu bilden, wobei eine Längsrichtung X sich vom hinteren Teil des Flugzeugs (10) zum vorderen Teil des Flugzeugs (10) erstreckt, eine Höhenrichtung Z sich von unten nach oben senkrecht zu der Längsrichtung X und zu einer Querrichtung Y erstreckt, die sich von rechts nach links senkrecht zu der Längsrichtung X und der Höhenrichtung Z erstreckt,
- wobei das Flugzeug (10) aufweist:
o einen Autopiloten (15), der Steuerbefehle gemäß vorbestimmten Betriebsmodi und gemäß Flugsollwerten erzeugt, wobei die Steuerbefehle Bewegungen des Flugzeugs (10) in Drehrichtung und/oder in Translationsrichtung gemäß den Richtungen X, Y, Z bewirken können,
o mindestens ein Steuermittel, welches es dem Piloten erlaubt, das Flugzeug (10) durch eine Übersteuerung während des Betriebs des Autopiloten (15) zu steuern,
- wobei das System (1) zur Bestimmung des Sollwerts der Fluggeschwindigkeit in Längsrichtung und des Sollwerts der Geschwindigkeit über Grund in Längsrichtung, die an einem aktuellen Betriebspunkt des Flugzeugs (10) gestartet wird, aufweist:
o mindestens einen Rechner (17) und
o mindestens einen Speicher (18),
**dadurch gekennzeichnet, dass** das System (1) zur Bestimmung des Sollwerts der Fluggeschwindigkeit in Längsrichtung und des Sollwerts der Geschwindigkeit über Grund in Längsrichtung das Verfahren nach einem der Ansprüche 1 bis 14 ausführt.

## Claims

1. A method for determining the setpoint of the longitudinal airspeed and the setpoint of the longitudinal ground speed which are initialised at a current operating point of a rotary-wing aircraft (10) depending on the exposure of said aircraft (10) to the wind, said aircraft (10) flying along a path *Tₛₒₗ* relative to the ground with a forward speed *Va,* said forward speed *Va* being able to be determined relative to the ground to form a ground speed *Vₛₒₗ* and relative to the air to form an airspeed *Vₐᵢᵣ,* a longitudinal direction X extending from the rear of said aircraft (10) towards the front of said aircraft (10), an elevation direction Z extending upwards perpendicularly to said longitudinal direction X and a transverse direction Y extending from right to left perpendicularly to said longitudinal direction X and elevation direction Z, said aircraft (10) comprising:
- an autopilot (15) which generates control commands in accordance with predefined modes of operation and in accordance with flight setpoints, said control commands being capable of causing movements of said aircraft (10) in rotation and/or in translation in said directions (X, Y, Z),
- at least one control means which enables a pilot of said aircraft (10) to pilot said aircraft (10) by transparency during operation of said autopilot (15),
- at least one computer (17), and
- at least one memory (18) storing characteristic speed curves of said aircraft (10),
each characteristic speed curve corresponding to a flight phase of said aircraft (10) and defining a setpoint of the longitudinal ground speed and a setpoint of the longitudinal airspeed corresponding to operating points of said aircraft (10) as a function of a longitudinal speed of the relative wind to which said aircraft (10) is subjected, each operating point being **characterised by** said setpoint of said longitudinal ground speed and said setpoint of said longitudinal airspeed, in a reference system with a longitudinal ground speed *V_{solX}* of the aircraft on the ordinate and its longitudinal airspeed *V_{airX}* on the abscissa, a flight phase corresponding to a flight of said aircraft (10) during which a pilot of said aircraft (10) does not cause any acceleration or deceleration of said aircraft (10) along said longitudinal direction X,
**characterised in that**
- during an initialisation stage, for a current flight phase of said aircraft (10) an initial characteristic speed curve is identified on which is located said current operating point of said aircraft (10),
- said setpoints of said longitudinal airspeed and ground speed of said aircraft (10) are determined for said current flight phase as a function of the variation of said total speed of the wind in said longitudinal direction X so that said current operating point of said aircraft (10) is displaced on said initial characteristic speed curve, with a gradual shift from maintaining a longitudinal ground speed *V_{solX}* of said aircraft (10) at low forward speeds to maintaining a longitudinal airspeed *V_{airX}* of said aircraft (10) at high forward speeds, and
- following a command by said pilot along said longitudinal direction for an acceleration or a deceleration of said aircraft (10), a new characteristic speed curve is identified on which is located said current operating point of said aircraft (10) once said longitudinal airspeed *V_{airX}* and ground speed *V_{solX}* of said aircraft (10) are stabilised and substantially constant.

2. A method according to Claim 1,
**characterised in that** there is applied to said autopilot (15) a longitudinal forward speed setpoint Vc equal to said setpoint of said longitudinal ground speed corresponding to said current operating point on said characteristic curve, or alternatively said setpoint of said longitudinal airspeed corresponding to said current operating point on said characteristic curve depending on said longitudinal speed of said wind.

3. A method according to any one of Claims 1 to 2,
**characterised in that** each characteristic speed curve is formed by a first, horizontal, segment corresponding to a setpoint of said constant longitudinal ground speed, an arc of a circle and a second, vertical, segment corresponding to a setpoint of said constant longitudinal airspeed.

4. A method according to Claim 3,
**characterised in that** said longitudinal forward speed setpoint Vc which is applied to the autopilot is equal to said setpoint of said longitudinal ground speed of said operating point when said operating point is located on said first segment or alternatively on a first portion of said arc of a circle which is located between said first segment and a transition point of said arc of a circle, and said longitudinal forward speed setpoint Vc which is applied to the autopilot is equal to said setpoint of said longitudinal airspeed of said operating point when said operating point is located on said second segment or alternatively on a second portion of said arc of a circle which is located between said transition point of said arc of a circle and said second segment.

5. A method according to any one of Claims 1 to 4,
**characterised in that** there is applied to said autopilot (15) said longitudinal forward speed setpoint Vc which is equal to said setpoint of said longitudinal airspeed independently of said longitudinal speed of said relative wind to which said aircraft (10) is subjected when said longitudinal airspeed *V_{airX}* is greater than a maximum longitudinal airspeed *V_{airXMax}.*

6. A method according to any one of Claims 1 to 5,
**characterised in that** said setpoint of said longitudinal ground speed is greater than or equal to a minimum longitudinal ground speed *V_{solXMin}.*

7. A method according to Claim 6,
**characterised in that**, when said setpoint of said longitudinal ground speed is equal to a minimum longitudinal ground speed *V_{solXMin}* and said longitudinal speed of said relative wind to which said aircraft (10) is subjected decreases in signed value, said characteristic speed curve of said aircraft (10) which is to be taken into account changes, a longitudinal forward speed setpoint Vc applied to said autopilot (15) being such that said setpoint of said longitudinal airspeed increases and said setpoint of said longitudinal ground speed is equal to said minimum longitudinal ground speed *V_{solXMin}.*

8. A method according to any one of Claims 1 to 7,
**characterised in that** said setpoint of said longitudinal airspeed is greater than or equal to a minimum longitudinal airspeed *V_{airXMin}* in order to avoid said aircraft (10) operating in an air mass which has already been churned by a main rotor (11) of said aircraft (10), which would then risk generating a loss of lift of said main rotor (11).

9. A method according to Claim 8,
**characterised in that** said minimum airspeed *V_{airXMin}* is variable as a function of the modulus of said total speed of the relative wind to which said aircraft (10) is subjected.

10. A method according to any one of Claims 8 to 9,
**characterised in that**, when said setpoint of said longitudinal airspeed is equal to said minimum longitudinal airspeed *V_{airXMin}* and said longitudinal speed of said relative wind to which said aircraft (10) is subjected increases in signed value, said characteristic speed curve of said aircraft (10) which is to be taken into account changes, a longitudinal forward speed setpoint Vc applied to said autopilot (15) being such that said setpoint of said longitudinal ground speed increases and said setpoint of said longitudinal airspeed is equal to said minimum longitudinal airspeed *V_{airXMin}.*

11. A method according to any one of Claims 1 to 10,
**characterised in that**, when said setpoint of said longitudinal airspeed of said aircraft (10) is equal to said minimum longitudinal airspeed *V_{airXMin}* or alternatively when said setpoint of said longitudinal ground speed is equal to a minimum longitudinal ground speed *V_{solXMin},* said characteristic speed curve which is to be taken into account is changed when a variation of said longitudinal speed of said relative wind to which said aircraft (10) is subjected is greater than or equal to a protective threshold.

12. A method according to any one of Claims 1 to 10,
**characterised in that**, when said setpoint of said longitudinal airspeed is equal to said minimum longitudinal airspeed *V_{airXMin}* or alternatively when said setpoint of said longitudinal ground speed is equal to a minimum longitudinal ground speed *V_{solXMin},* said characteristic speed curve which is to be taken into account is changed when a longitudinal speed of said relative wind to which said aircraft (10) is subjected varies according to a hysteresis threshold.

13. A method according to Claim 8,
**characterised in that**, when said setpoint of said longitudinal airspeed is equal to said minimum longitudinal airspeed *V_{airXMin}* and said pilot of said aircraft (10) intentionally reduces said longitudinal airspeed *V_{airX}* of said aircraft (10) to below said minimum longitudinal airspeed *V_{airXMin},* a new minimum longitudinal airspeed *V_{airXMin2}* is defined as being equal to said longitudinal airspeed *V_{airX}* selected by the pilot reduced by a predetermined value V_{δ} and replaces said minimum longitudinal airspeed *V_{airXMin}* until said setpoint of said longitudinal airspeed is greater than or equal to said minimum longitudinal airspeed *V_{airXMin}* increased by said predetermined value V_{δ}.

14. A method according to Claim 6,
**characterised in that**, when said setpoint of said longitudinal ground speed is equal to said minimum longitudinal ground speed *V_{solXMin}* and said pilot of said aircraft (10) intentionally reduces said longitudinal ground speed *V_{solX}* to below said minimum longitudinal ground speed *V_{solXMin},* said longitudinal ground speed *V_{solX}* is maintained in accordance with the commands given by said pilot.

15. A system (1) for determining the setpoint of the longitudinal airspeed and the setpoint of the longitudinal ground speed which are initialised at a current operating point of a rotary-wing aircraft (10) depending on the exposure of said aircraft (10) to the wind, said aircraft (10) flying along a path *Tₛₒₗ* relative to the ground with a forward speed *Va,* said forward speed *Va* being able to be determined relative to the ground to form a ground speed *Vₛₒₗ* and relative to the air to form an airspeed *Vₐᵢᵣ,* a longitudinal direction X extending from the rear of said aircraft (10) towards the front of said aircraft (10), an elevation direction Z extending upwards perpendicularly to said longitudinal direction X and a transverse direction Y extending from right to left perpendicularly to said longitudinal direction X and elevation direction Z,
- said aircraft (10) comprising:
o an autopilot (15) which generates control commands in accordance with predefined modes of operation and in accordance with flight setpoints, said control commands being capable of causing movements of said aircraft (10) in rotation and/or in translation in said directions (X, Y, Z),
∘ at least one control means which enables the pilot to pilot said aircraft (10) by transparency during operation of said autopilot (15),
- said system (1) for determining the setpoint of the longitudinal airspeed and the setpoint of the longitudinal ground speed which are initialised at a current operating point of an aircraft (10) comprising:
∘ at least one computer (17), and
∘ at least one memory (18),
**characterised in that** said system (1) for determining the setpoint of the longitudinal airspeed and the setpoint of the longitudinal ground speed implements the method according to any one of Claims 1 to 14.
